# EUROPEAN PATENT SPECIFICATION

(11) **EP 4 075 896 B1**
(45) Date of publication and mention of the grant of the patent: **26.03.2025**
(21) Application number: 20914555.6
(22) Date of filing: 15.01.2020
(51) Int. Cl.: H04W 72/04, H04L 5/00

(54) **DATA TRANSMISSION METHOD AND APPARATUS**
DATENÜBERTRAGUNGSVERFAHREN UND -VORRICHTUNG
PROCÉDÉ ET APPAREIL DE TRANSMISSION DE DONNÉES

(43) Date of publication of application: 19.10.2022
(73) Proprietor: Huawei Technologies Co., Ltd., Shenzhen, Guangdong 518129 (CN)
(72) Inventor: ZHANG, Yunhao, Shenzhen, Guangdong 518129 (CN); LUO, Zhe, Shenzhen, Guangdong 518129 (CN); XU, Xiuqiang, Shenzhen, Guangdong 518129 (CN); CHEN, Yan, Shenzhen, Guangdong 518129 (CN)
(74) Representative: Pfenning, Meinig & Partner mbB
(86) International application number: PCT/CN2020/072337
(87) International publication number: WO 2021/142682

(56) References cited:
- CN-A- 105 992 383
- CN-A- 107 888 361
- CN-A- 109 246 828
- US-A1- 2018 270 799

## Description

### TECHNICAL FIELD

This application relates to the field of communication technologies, and in particular, data transmission methods, to a communication apparatus, to a computer readable storage medium and to a computer program product.

### BACKGROUND

With development of communication technologies and improvement of user requirements, terminal devices in a communication scenario are gradually presented in features such as a large quantity and a plurality of forms. For example, in an industrial automation scenario, there are a large quantity of monitoring devices, machines, sensors, and the like in a factory; in a home and life scenario, there are a large quantity of mobile phones, tablets, wearable devices, smart appliances, vehicle-mounted terminal devices, and the like.

CN 107888361 describes a public control information transmission method that comprises the following steps: sending public control information on M time division time domain resources by using M sending resources, wherein each time domain resource comprises N time domain symbols; and determining the time domain resource where the public control information of each sending resource is located according to a sending resource index, or determining the time domain resource where the public control information of each sending resource is located according to the sending resource index and the N value, wherein M and N are natural numbers.

### SUMMARY

This application provides a data transmission method and an apparatus, to implement dynamic scheduling when a terminal in an RRC idle mode or an RRC inactive mode performs data transmission with a base station.

According to a first aspect, an embodiment of this application provides a data transmission method. The method may be implemented by a terminal device, or may be implemented by a component of the terminal device, for example, implemented by a component such as a processing chip or a circuit in the terminal device. The method includes: When the terminal device is in an RRC non-connected mode, the terminal device receives first DCI from a network device in a common detection space, and receives first downlink data based on the first DCI, where the first downlink data is used to indicate a second detection space. For example, the first downlink data may be but is not limited to a paging message, a random access response (random access response, RAR), or a MsgB (message B). The terminal device receives second DCI from the network device in the second detection space, where the second DCI is used to indicate a transmission parameter of second downlink data, and the terminal device receives the second downlink data based on the transmission parameter that is of the second downlink data and that is indicated by the second DCI, where the second downlink data is data specific to the terminal device, and the transmission parameter of the second downlink data may be used to determine a resource position of the second downlink data.

According to the foregoing method, in the RRC non-connected mode, the terminal device may receive the first downlink data based on the first DCI detected in the common detection space, receive the second DCI based on the second detection space indicated by the first downlink data, and receive the second downlink data based on the transmission parameter indicated by the second DCI. In this way, the terminal device in the RRC non-connected mode performs data transmission specific to the terminal device with the network device. Further, the common detection space may carry scheduling information used to schedule a paging message, a RAR, or a MsgB, in other words, the first downlink data scheduled by using the first DCI may be the paging message, the RAR, or the MsgB. Therefore, even if the terminal device is in an RRC idle mode or an RRC inactive mode, the terminal device may still receive the paging message, the RAR, or the MsgB for a plurality of times, and perform the foregoing procedure after receiving the paging message, the RAR, or the MsgB, to obtain the transmission parameter of the second downlink data. Optionally, transmission parameters obtained a plurality of times may be different. For example, the network device may reconfigure a resource position of a downlink data channel based on a channel change, and indicate the terminal device to perform data transmission based on a reconfigured transmission parameter, so that resource scheduling is flexible when the terminal device is in the RRC non-connected mode, a specific data transmission manner between the terminal device and the network device is more adaptive to a channel status, and can improve transmission efficiency of a communication system. When the first downlink data or the second DCI or the second downlink data is data specific to the terminal device, data transmission security may be further improved in addition to the foregoing descriptions.

In a possible design, alternatively, when a terminal device is in an RRC non-connected mode, the terminal device receives first DCI from a network device in a dedicated detection space of the terminal device, and receives first downlink data based on the first DCI, where the first downlink data is used to indicate a second detection space. The terminal device receives second DCI from the network device in the second detection space, where the second DCI is used to indicate a transmission parameter of second downlink data, and the terminal device receives the second downlink data based on the transmission parameter that is of the second downlink data and that is indicated by the second DCI, where the second downlink data is data specific to the terminal device.

According to the foregoing method, detection of the first DCI is performed in the dedicated detection space of the terminal device, and the first downlink data is received based on the first DCI. Then, detection of the second DCI is performed in the second detection space indicated by the first downlink data, and the second downlink data may be received based on the transmission parameter indicated by the second DCI. In this way, the terminal device in the RRC non-connected mode performs data transmission specific to the terminal device with the network device. Further, when the terminal device is in an RRC idle mode or an RRC inactive mode, detection may be performed in a common detection space, or the common detection space and the dedicated detection space of the terminal device. Therefore, in addition to the common detection space, the terminal device may also perform detection of the first DCI in the dedicated detection space corresponding to the terminal device, to perform the foregoing procedure, and obtain the transmission parameter of the second downlink data. Optionally, transmission parameters obtained a plurality of times may be different, so that a transmission parameter of downlink data is flexibly adjusted. In addition, the dedicated detection space of the terminal device is a resource space specific to the terminal device, or a resource space specific to a terminal device group including the terminal device. It may be understood that another terminal device other than the terminal device or the terminal device group cannot receive or demodulate data transmitted in the dedicated detection space. Therefore, the transmission parameter of the downlink data is flexibly scheduled, and data transmission security is further improved.

In a possible design, that the first downlink data is used to indicate a second detection space includes: The first downlink data is used to indicate a control resource set CORESET and a search space SearchSpace, and the CORESET and the SearchSpace are used to determine the second detection space.

In a possible design, the first downlink data is further used to indicate valid time and/or a valid number of the second detection space.

In the foregoing method, the first downlink data is used to indicate a configuration of the second detection space, where the configuration may be the CORESET and the SearchSpace, and the valid time and/or the valid number of the second detection space are/is configured. A peer device, for example, the network device may send, in the valid time or the valid number and in a configured second detection space, second DCI indicating different transmission parameters, to adjust the transmission parameter of the second downlink data. In the valid time or the valid number, the network device does not need to repeatedly perform steps of sending the first DCI and sending the first downlink data to indicate the transmission parameter of the second detection space. This flexibly adjusts a resource position of the second downlink data, and also reduces signaling overheads.

In a possible design, the method further includes: sending feedback information of the second downlink data to the network device based on an uplink transmission parameter, where the uplink transmission parameter is indicated by the first DCI, the second DCI, the first downlink data, or the second downlink data.

In the foregoing method, the uplink transmission parameter configured for the terminal device is indicated by using the first DCI, the second DCI, the first downlink data, or the second downlink data in the foregoing procedure. For example, the uplink transmission parameter is a transmission parameter of an uplink channel (for example, a control channel PUCCH or a data channel PUSCH). The uplink channel is used to carry and send the feedback information, so that the uplink transmission parameter of the terminal device can be flexibly adjusted.

According to a second aspect, an embodiment of this application provides a data transmission method. The method may be implemented by a terminal device, or may be implemented by a component of the terminal device, for example, implemented by a component such as a processing chip or a circuit in the terminal device. The method includes: When the terminal device is in an RRC non-connected mode, the terminal device receives first DCI from a network device in a common detection space, and receives first downlink data based on the first DCI, where the first downlink data is used to indicate a transmission parameter of second downlink data, and the first downlink data may be but is not limited to a paging message, a RAR, or a message B MsgB. The terminal device receives the second downlink data based on the transmission parameter of the second downlink data, where the second downlink data is data specific to the terminal device.

According to the foregoing method, in the RRC non-connected mode, the terminal device may receive the first downlink data based on the first DCI detected in the common detection space, and receive the second downlink data based on the transmission parameter indicated by the first downlink data. In this way, the terminal device in the RRC non-connected mode performs data transmission specific to the terminal device with the network device. Further, the common detection space may carry scheduling information used to schedule a paging message, a RAR, or a MsgB, in other words, the first downlink data scheduled by using the first DCI may be the paging message, the RAR, or the MsgB. Therefore, even if the terminal device is in an RRC idle mode or an RRC inactive mode, the terminal device may still receive the paging message, the RAR, or the MsgB for a plurality of times, and perform the foregoing procedure after receiving the paging message, the RAR, or the MsgB, to obtain the transmission parameter of the second downlink data. Optionally, transmission parameters obtained a plurality of times may be different. For example, the network device may reconfigure a resource position of a downlink data channel based on a channel change, and indicate the terminal device to perform specific data transmission based on a reconfigured transmission parameter, so that resource scheduling is flexible when the terminal device is in the RRC non-connected mode, a specific data transmission manner between the terminal device and the network device is more adaptive to a channel status, and can improve transmission efficiency of a communication system. When the first downlink data or the second downlink data is data specific to the terminal device, data transmission security may be further improved in addition to the foregoing descriptions.

In a possible design, alternatively, the terminal device receives first DCI from a network device in a dedicated detection space of the terminal device, and receives first downlink data based on the first DCI, where the first downlink data is used to indicate a transmission parameter of second downlink data, and the first downlink data is a paging message, a RAR, or a message B MsgB. The terminal device receives the second downlink data based on the transmission parameter of the second downlink data, where the second downlink data is data specific to the terminal device.

According to the foregoing method, detection of the first DCI is performed in the dedicated detection space of the terminal device, the first downlink data is received based on the first DCI, and then the second downlink data is received based on the transmission parameter indicated by the first downlink data. In this way, the terminal device in an RRC non-connected mode performs data transmission specific to the terminal device with the network device. Further, when the terminal device is in an RRC idle mode or an RRC inactive mode, detection may be performed in a common detection space, or the common detection space and the dedicated detection space of the terminal device. Therefore, in addition to the common detection space, the terminal device may also perform detection of the first DCI in the dedicated detection space corresponding to the terminal device, to perform the foregoing procedure, and obtain the transmission parameter of a second downlink data packet. Optionally, transmission parameters obtained a plurality of times may be different, so that a transmission parameter of downlink data is flexibly adjusted. In addition, the dedicated detection space of the terminal device is a resource space specific to the terminal device, or a resource space specific to a terminal device group including the terminal device. It may be understood that another terminal device other than the terminal device or the terminal device group cannot receive or demodulate data transmitted in the dedicated detection space. Therefore, the transmission parameter of the downlink data is flexibly scheduled, and data transmission security is further improved.

In a possible design, the method further includes: sending feedback information of the second downlink data to the network device based on an uplink transmission parameter, where the uplink transmission parameter is indicated by the first DCI, the first downlink data, or the second downlink data.

According to the foregoing method, the uplink transmission parameter configured for the terminal device is indicated by using the first DCI, the first downlink data, or the second downlink data in the foregoing procedure, so that the uplink transmission parameter of the terminal device is flexibly adjusted.

According to a third aspect, an embodiment of this application provides a data transmission method. The method may be implemented by a terminal device, or may be implemented by a component of the terminal device, for example, implemented by a component such as a processing chip or a circuit in the terminal device. The method includes: When the terminal device is in an RRC non-connected mode, the terminal device receives first DCI from a network device in a common detection space, and receives a paging message and second downlink data based on the first DCI, where the second downlink data is data specific to the terminal device.

According to the foregoing method, the terminal device may receive, in the RRC non-connected mode, common data and the second downlink data based on the first DCI detected in the common detection space. The common data includes the paging message. In this way, the terminal device in the RRC non-connected mode performs data transmission specific to the terminal device with the network device. Further, even if the terminal device is in an RRC idle mode or an RRC inactive mode, the terminal device may still perform detection in the common detection space for a plurality of times, receive the first DCI, and perform the foregoing procedure after receiving the first DCI, to obtain a transmission parameter of the second downlink data. In addition, because the second downlink data is the data specific to the terminal device, data transmission security is improved. Optionally, transmission parameters obtained a plurality of times may be different, so that a transmission parameter of downlink data is flexibly adjusted.

In a possible design, alternatively, when the terminal device is in an RRC non-connected mode, the terminal device receives first DCI from a network device in a dedicated detection space of the terminal device, and receives common data and second downlink data based on the first DCI, where the second downlink data is data specific to the terminal device.

According to the foregoing method, detection of the first DCI is performed in the dedicated detection space of the terminal device, and the common data and the second downlink data are received based on the first DCI. The common data includes a paging message. In this way, the terminal device in the RRC non-connected mode performs data transmission specific to the terminal device with the network device. Further, when the terminal device is in an RRC idle mode or an RRC inactive mode, detection may be performed in a common detection space, or the common detection space and the dedicated detection space of the terminal device. Therefore, in addition to the common detection space, the terminal device may also perform detection of the first DCI in the dedicated detection space corresponding to the terminal device, to perform the foregoing procedure, and obtain the transmission parameter of a second downlink data packet. In addition, the dedicated detection space of the terminal device is a resource space specific to the terminal device, or a resource space specific to a terminal device group including the terminal device. It may be understood that another terminal device other than the terminal device or the terminal device group cannot receive or demodulate data transmitted in the dedicated detection space. Therefore, data transmission security is improved. Optionally, transmission parameters obtained a plurality of times may be different, so that a transmission parameter of downlink data is flexibly adjusted.

In a possible design, the method further includes: sending feedback information of the second downlink data to the network device based on an uplink transmission parameter, where the uplink transmission parameter is indicated by the first DCI, common data, or the second downlink data.

According to the foregoing method, the uplink transmission parameter configured for the terminal device is indicated by using the first DCI or the second downlink data in the foregoing procedure, so that the uplink transmission parameter of the terminal device is flexibly adjusted.

According to a fourth aspect, an embodiment of this application provides a data transmission method. The method may be implemented by a network device, or may be implemented by a component of the network device, for example, implemented by a component such as a processing chip or a circuit in the network device. The method includes: sending first DCI to a terminal device in a common detection space, where the first DCI is used to schedule first downlink data, and the first downlink data is used to indicate a second detection space; sending second DCI to the terminal device in the second detection space, where the second DCI is used to schedule second downlink data, and the second downlink data is data specific to the terminal device; and sending the second downlink data to the terminal device, where the terminal device may be in an RRC non-connected mode, and the first downlink data may be but is not limited to a paging message, a RAR, or a message B MsgB.

In a possible design, that the first downlink data is used to indicate a second detection space includes: The first downlink data is used to indicate a control resource set CORESET and a search space SearchSpace of the second detection space.

In a possible design, the first downlink data is further used to indicate valid time and/or a valid number of the second detection space.

In a possible design, the method further includes: receiving feedback information of the second downlink data from the terminal device based on an uplink transmission parameter, where the uplink transmission parameter is indicated by the first DCI, the second DCI, the first downlink data, or the second downlink data.

According to a fifth aspect, an embodiment of this application provides a data transmission method. The method may be implemented by a network device, or may be implemented by a component of the network device, for example, implemented by a component such as a processing chip or a circuit in the network device. The method includes: sending first DCI to a terminal device in a common detection space, where the first DCI is used to schedule first downlink data, the first downlink data is used to indicate a transmission parameter of second downlink data, and the first downlink data may be but is not limited to a paging message, a RAR, or a message B MsgB; and sending the second downlink data to the terminal device, where the second downlink data is data specific to the terminal device, and the terminal device may be in an RRC non-connected mode.

In a possible design, the method further includes: receiving feedback information of the second downlink data from the terminal device based on an uplink transmission parameter, where the uplink transmission parameter is indicated by the first DCI, second DCI, the first downlink data, or the second downlink data.

According to a sixth aspect, an embodiment of this application provides a data transmission method. The method may be implemented by a network device, or may be implemented by a component of the network device, for example, implemented by a component such as a processing chip or a circuit in the network device. The method includes: sending first DCI to a terminal device in a common detection space, where the first DCI is used to schedule a paging message and second downlink data, the second downlink data is data specific to the terminal device, and the terminal device is in an RRC non-connected mode.

In a possible design, the method further includes: receiving feedback information of the second downlink data from the terminal device based on an uplink transmission parameter, where the uplink transmission parameter is indicated by the first DCI, second DCI, first downlink data, or the second downlink data.

According to a seventh aspect, an embodiment of this application provides a communication apparatus. The apparatus has a function of implementing the method according to the first aspect, the method according to the second aspect, or the method according to the third aspect. The function may be implemented by hardware, or may be implemented by software, or may be implemented by hardware by executing corresponding software. The apparatus includes one or more modules corresponding to the foregoing function, for example, includes a transceiver unit and a processing unit.

In a possible design, the apparatus may be a chip or an integrated circuit.

In a possible design, the apparatus includes a memory and a processor. The memory is configured to store a program or instructions executed by the processor. When the program or the instructions are executed by the processor, the apparatus may perform the method in the first aspect, the method in the second aspect, or the method in the third aspect.

In a possible design, the apparatus may be a terminal device.

According to an eighth aspect, an embodiment of this application provides a communication apparatus. The apparatus has a function of implementing the method in the fourth aspect, the method in the fifth aspect, or the method in the sixth aspect. The function may be implemented by hardware, or may be implemented by software, or may be implemented by hardware by executing corresponding software. The apparatus includes one or more modules corresponding to the foregoing function, for example, includes a transceiver unit and a processing unit.

In a possible design, the apparatus may be a chip or an integrated circuit.

In a possible design, the apparatus includes a memory and a processor. The memory is configured to store a program or instructions executed by the processor. When the program or the instructions are executed by the processor, the apparatus may perform the method in the fourth aspect, the method in the fifth aspect, or the method in the sixth aspect.

In a possible design, the apparatus may be a network device.

According to a ninth aspect, an embodiment of this application provides a system. The system includes the communication apparatus according to the seventh aspect and the communication apparatus according to the eighth aspect.

According to a tenth aspect, an embodiment of this application provides a communication apparatus. The communication apparatus includes a processor, a memory, and a communication interface. The communication interface is configured to receive a signal or send a signal, the memory is configured to store a program or instruction code, and the processor is configured to invoke the program or the instruction code from the memory to perform the method according to the first aspect, the method according to the second aspect, or the method according to the third aspect.

According to an eleventh aspect, an embodiment of this application provides a communication apparatus. The communication apparatus includes a processor, a memory, and a communication interface. The communication interface is configured to receive a signal or send a signal, the memory is configured to store a program or instruction code, and the processor is configured to invoke the program or the instruction code from the memory to perform the method according to the fourth aspect, the method according to the fifth aspect, or the method according to the sixth aspect.

According to a twelfth aspect, an embodiment of this application provides a communication apparatus. The communication apparatus includes a processor and an interface circuit, and the interface circuit is configured to: receive a program or instruction code and transmit the program or the instruction code to the processor. The processor runs the program or the instruction code to perform the method according to the first aspect, the method according to the second aspect, or the method according to the third aspect.

According to a thirteenth aspect, an embodiment of this application provides a communication apparatus. The communication apparatus includes a processor and an interface circuit, and the interface circuit is configured to: receive a program or instruction code and transmit the program or the instruction code to the processor. The processor runs the program or the instruction code to perform the method according to the fourth aspect, the method according to the fifth aspect, or the method according to the sixth aspect.

According to a fourteenth aspect, an embodiment of this application provides a computer-readable storage medium. The computer-readable storage medium is configured to store a program or instructions. When the program or the instructions are executed, the method according to the first aspect, the method according to the second aspect, or the method according to the third aspect is implemented.

According to a fifteenth aspect, an embodiment of this application provides a computer-readable storage medium. The computer-readable storage medium is configured to store a program or instructions. When the program or the instructions are executed, the method according to the fourth aspect, the method according to the fifth aspect, or the method according to the sixth aspect is implemented.

According to a sixteenth aspect, an embodiment of this application provides a computer program product including instructions. When the instructions are executed, the method according to the first aspect, the method according to the second aspect, or the method according to the third aspect is implemented.

According to a seventeenth aspect, an embodiment of this application provides a computer program product including instructions. When the instructions are executed, the method according to the fourth aspect, the method according to the fifth aspect, or the method according to the sixth aspect is implemented.

### BRIEF DESCRIPTION OF DRAWINGS

FIG. 1 is a schematic diagram of RRC mode switching of a terminal device according to an embodiment of this application;
FIG. 2 is a schematic diagram of a communication architecture according to an embodiment of this application;
FIG. 3 is a schematic flowchart of a data transmission method according to an embodiment of this application;
FIG. 4 is a schematic diagram of an application scenario of data transmission according to an embodiment of this application;
FIG. 5 is a schematic diagram of an RBG according to an embodiment of this application;
FIG. 6 is a schematic diagram of determining a time-frequency resource position according to an embodiment of this application;
FIG. 7 is a schematic diagram of an application scenario of data transmission according to an embodiment of this application;
FIG. 8 is a schematic flowchart of another data transmission method according to an embodiment of this application;
FIG. 9a is a schematic diagram of an application scenario of data transmission according to an embodiment of this application;
FIG. 9b is a schematic diagram of an application scenario of data transmission according to an embodiment of this application;
FIG. 10 is a schematic flowchart of a data transmission method according to an embodiment of this application;
FIG. 11 is a schematic diagram of an application scenario of data transmission according to an embodiment of this application;
FIG. 12 to FIG. 14 are schematic diagrams of application scenarios of indicating an uplink time-frequency resource according to embodiments of this application; and
FIG. 15 to FIG. 18 are schematic diagrams of structures of communication apparatuses according to embodiments of this application.

### DESCRIPTION OF EMBODIMENTS

To make objectives, technical solutions, and advantages of embodiments of this application clearer, the following further describes embodiments of this application in detail with reference to the accompanying drawings. A specific operation method in a method embodiment may also be applied to an apparatus embodiment or a system embodiment.

In a wireless communication system such as a long term evolution (long term evolution, LTE) system or a 5th generation (5th generation, 5G) communication system, a terminal device may perform a radio resource control (radio resource control, RRC) setup process with a network device. After the terminal device sets up an RRC connection to the network device, an RRC mode of the terminal device is an RRC connected mode. Then, the RRC mode of the terminal device may be switched between the following modes: an RRC idle (RRC_IDLE) mode, the RRC connected (RRC_CONNECTED) mode, and an RRC inactive (RRC_INACTIVE) mode.

First, the three RRC modes of the terminal device are described.

### 1. RRC connected mode

When a terminal device is in an RRC_CONNECTED mode, there is an RRC connection between the terminal device and a network device. In this case, the network device knows that the terminal device is within a coverage range of the network device or within a management range of the network device. For example, the network device knows that the terminal device is within a coverage range of a cell managed by the network device. A core network knows a network device with a coverage range or a management range in which the terminal device is located, and the core network knows the network device via which the terminal device can be positioned or found.

When the terminal device is in the RRC_CONNECTED mode, the network device and the terminal device may transmit a data channel and/or a control channel specific to the terminal device, to transmit specific information or unicast information of the terminal device. For example, the network device may send a physical downlink control channel (physical downlink control channel, PDCCH) and/or a physical downlink shared channel (physical downlink shared channel, PDSCH) that are/is specific to the terminal device to the terminal device, and/or the terminal device may send a physical uplink shared channel (physical uplink shared channel, PUSCH) and/or a physical uplink control channel (physical uplink control channel, PUCCH) that are/is specific to the terminal device to the network device. The terminal device may receive, through the PDCCH, an uplink scheduling indication or a downlink scheduling indication sent by the network device. The terminal device may send, to the network device through the PUCCH, hybrid automatic repeat request (hybrid automatic repeat request, HARQ) information that is used to indicate a status of demodulating downlink data by the terminal device.

For example, the PDCCH specific to the terminal device meets one or more of the following conditions: a resource position of the PDCCH is specific to the terminal device, a cyclic redundancy check (cyclic redundancy check, CRC) of the PDCCH is scrambled by using an identifier of the terminal device, and the PDCCH is used to schedule the PDSCH or the PUSCH specific to the terminal device. That the PDCCH is used to schedule the PDSCH or the PUSCH may also be described as follows: The PDCCH is used to carry a transmission parameter of the PDSCH or the PUSCH.

In embodiments of this application, the transmission parameter of the PDSCH or the PUSCH includes one or more of the following parameters: a time domain resource position, a frequency domain resource position, a modulation and coding scheme (modulation and coding scheme, MCS), a modulation scheme, a coding scheme, a transport block size (transport block size, TBS), a redundancy version (redundancy version, RV), a frequency hopping indication, and a power control command.

In embodiments of this application, the identifier of the terminal device may be a cell radio network temporary identifier (cell radio network temporary identifier, C-RNTI) of the terminal device or another type of radio network temporary identifier (radio network temporary identifier, RNTI) of the terminal device.

For example, the PDSCH specific to the terminal device meets one or more of the following conditions: The transmission parameter of the PDSCH is specific to the terminal device or specific to a terminal device group to which the terminal device belongs, the PDSCH is scheduled by using the PDCCH specific to the terminal device, a CRC of the PDSCH is scrambled by using the identifier of the terminal device, and information carried on the PDSCH is specific to the terminal device or the terminal device group to which the terminal device belongs.

For example, the PUSCH specific to the terminal device meets one or more of the following conditions: The transmission parameter of the PUSCH is specific to the terminal device or specific to a terminal device group to which the terminal device belongs, the PUSCH is scheduled by using the PDCCH specific to the terminal device, a CRC of the PUSCH is scrambled by using the identifier of the terminal device, and information carried on the PUSCH is specific to the terminal device or the terminal device group to which the terminal device belongs.

For example, the PUCCH specific to the terminal device meets one or more of the following conditions: The transmission parameter of the PUCCH is specific to the terminal device or specific to a terminal device group to which the terminal device belongs, a CRC of the PUCCH is scrambled by using the identifier of the terminal device, and information carried on the PUCCH is specific to the terminal device or the terminal device group to which the terminal device belongs.

### 2. RRC idle mode

When a terminal device is in an RRC idle mode, an RRC connection between the terminal device and an access network is released. In this case, the terminal device may receive a paging message, a broadcast channel, and/or system information from a network device.

In the RRC mode, the network device does not know whether the terminal device is within a coverage range of the network device or a management range of the network device. For example, the network device does not know whether the terminal device is within a coverage range of a cell managed by the network device. A core network does not know a network device with a coverage range or a management range in which the terminal device is located, and the core network does not know the network device via which the terminal device can be positioned or found.

### 3. RRC inactive mode

When a terminal device is in an RRC inactive mode, there is no RRC connection between the terminal device and a network device. In this case, the network device does not know whether the terminal device is within a coverage range of the network device or a management range of the network device. For example, the network device does not know whether the terminal device is within a coverage range of a cell managed by the network device. A core network knows a network device or network devices with a coverage range or a management range in which the terminal device is located, and the core network knows the network device or the network devices via which the terminal device can be positioned or found.

When the terminal device is in the RRC_INACTIVE mode, the terminal device may receive a paging message, a synchronization signal, a broadcast message, and/or system information from the network device.

In some embodiments of this application, the RRC inactive mode and the RRC idle mode may be collectively referred to as an RRC non-connected mode.

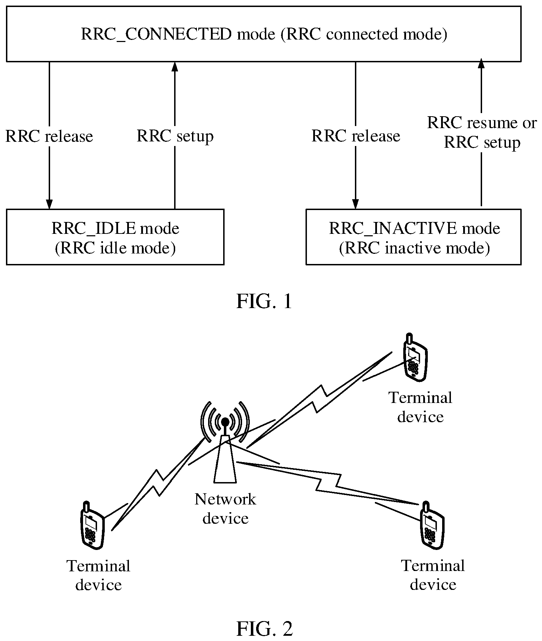

FIG. 1 is an example diagram of switching of the foregoing three RRC modes of a terminal device, and includes the following several switching procedures.
1. RRC connected mode -> RRC idle mode
   For example, a network device may send an RRC release (RRC release) message to a terminal device, so that the terminal device is switched from an RRC connected mode to an RRC idle mode.
2. RRC connected mode -> RRC inactive mode
   For example, a network device may send an RRC suspend (RRC suspend) message or an RRC release (RRC release) message to a terminal device, so that the terminal device is switched from an RRC connected mode to an RRC inactive mode.
3. RRC idle mode -> RRC connected mode

For example, a terminal device may be switched from an RRC idle mode to an RRC connected mode in an RRC connection setup process with a network device. The RRC setup process may be triggered by a higher layer of the terminal device. For example, when the terminal device needs to send uplink data, the higher layer of the terminal device triggers the RRC setup process. Alternatively, the RRC setup process may be triggered by the network device. For example, when the terminal device is in the RRC idle mode, the network device sends a paging message to the terminal device, where the paging message includes an identifier of the terminal device. Correspondingly, after receiving the paging message from the network device, the terminal device triggers the RRC setup process.

Specifically, the RRC setup process may be that the terminal device sends an RRC setup request (RRC Connection Request) message to the network device. Correspondingly, after the network device receives the request message, if the network device sends an RRC setup (RRC Connection setup) message to the terminal device, it means that the network device allows access of the terminal device, and an RRC mode of the terminal device may be switched to the RRC connected mode. If the network device sends an RRC reject (RRC Connection reject) message to the terminal device, it means that the network device rejects access of the terminal device, and an RRC mode of the terminal device continues to stay in the RRC idle mode.

In embodiments of this application, a scenario in which the higher layer of the terminal device triggers the terminal device to initiate the RRC setup process includes but is not limited to that the terminal device needs to send information to the network device. For example, a service data adaptation protocol (service data adaptation protocol, SDAP) layer, a packet data convergence protocol (packet data convergence protocol, PDCP) layer, and/or a radio link control (radio link control, RLC) layer of the terminal device trigger/triggers an RRC layer of the terminal device and the network device to perform the RRC setup process, the RRC layer of the terminal device triggers a media access control (media access control, MAC) layer of the terminal device and the network device to perform an access process, to perform the RRC setup process with the network device during or after the access process.

### 4. RRC inactive mode -> RRC connected mode

For example, when a terminal device is in an RRC inactive mode, an RRC mode of the terminal device may be switched to an RRC connected mode in an RRC setup or RRC resume process.

In the RRC_INACTIVE mode, after the terminal device receives a paging message from the network device or is triggered by a higher layer of the terminal device, the terminal device may initiate the RRC resume process, to attempt to resume an RRC connection to the network device to enter the RRC_CONNECTED mode. For example, the RRC resume process between the terminal device and the network device includes: The terminal device sends an RRC resume request (RRCResumeRequest) message to the network device. After receiving the request, the network device sends an RRC setup (RRCSetup) message or an RRC resume (RRCResume) message to the terminal device, so that the mode of the terminal device can be switched to the RRC_CONNECTED mode. Alternatively, the network device sends an RRC release (RRCRelease) message to the terminal device, so that the mode of the terminal device is switched from the RRC_INACTIVE mode to an RRC_IDLE mode. Alternatively, the network device sends an RRC reject (RRCReject) message to the terminal device, so that the terminal device continues to stay in the RRC_INACTIVE mode.

### 5. RRC inactive mode -> RRC idle mode

For example, when a terminal device is in an RRC inactive mode, a network device use a release process to enable the terminal device to be switched from the RRC inactive mode to an RRC idle mode.

In a possible implementation, when data transmission specific to the terminal device is performed between the network device and the terminal device, the terminal device needs to be in an RRC connected mode. The data transmission includes a case in which the network device sends data to the terminal device, and/or a case in which the terminal device sends data to the network device. For example, if the terminal device is in the RRC idle mode or the RRC inactive mode, the terminal device first performs an RRC setup process with the network device. After the terminal device sets up an RRC connection to the network device, a mode of the terminal device is the RRC connected mode. In this case, the data transmission specific to the terminal device may be performed. However, for some terminal devices having an energy saving requirement, to avoid signaling overheads and processing power consumption caused by switching to the RRC connected mode before data transmission, the terminal device may be allowed to perform data transmission specific to the terminal device with the network device when the terminal device is in the RRC idle mode or the RRC inactive mode. Therefore, how a terminal device performs, in an RRC non-connected mode, data transmission specific to the terminal device with a network device is a problem that needs to be resolved.

In view of this, downlink data transmission is used as an example to provide technical solutions in embodiments of this application. In embodiments of this application, a transmission parameter of a downlink data channel of a terminal device may be directly or indirectly indicated based on a message of a common detection space. In a cell, the common detection space may be a configured resource space in which all terminal devices or a terminal device group can receive a downlink message in any RRC mode. When the terminal is in an RRC non-connected mode, the network device may send a downlink message in the common detection space, to indicate a resource position of the downlink data channel. In other words, in this manner, even if the terminal device is in the RRC non-connected mode, the network device may still reconfigure the resource position of the downlink data channel based on a channel change, and indicate the terminal device to perform data transmission based on a reconfigured transmission parameter, to improve transmission efficiency of a communication system.

The technical solutions provided in embodiments of this application may be applied to various communication systems, for example, may be applied to communication systems such as LTE and 5G, or may be applied to wireless fidelity (wireless fidelity, Wi-Fi), worldwide interoperability for microwave access (worldwide interoperability for microwave access, WIMAX), or a future communication system, for example, a future 6th generation (6th generation, 6G) system. 5G may also be referred to as new radio (new radio, NR). For example, in a communication system to which the technical solutions provided in embodiments of this application may be applied, one entity may initiate paging or access to another entity. An air interface communication process between a network device and a terminal device is used as an example in a description process of embodiments of this application. Actually, the technical solutions provided in embodiments of this application may also be applied to sidelink (sidelink, SL) communication, provided that one terminal device can initiate paging to another terminal device in the communication. For example, the technical solutions provided in embodiments of this application may be applied to a device-to-device (device-to-device, D2D) communication scenario, for example, may be an NR D2D communication scenario and/or an LTE D2D communication scenario; may be applied to a vehicle-to-everything (vehicle-to-everything, V2X) communication scenario, for example, may be an NR V2X communication scenario, an LTE V2X communication scenario, an Internet of Vehicles communication scenario, and/or a vehicle-to-vehicle (vehicle-to-vehicle, V2V) communication scenario; or may be used in fields such as intelligent driving and intelligent connected vehicles.

A communication system includes communication devices, and the communication devices may perform wireless communication by using an air interface resource. The communication device may include a network device and a terminal device, and the network device may also be referred to as a network side device. The air interface resource may include at least one of a time domain resource, a frequency domain resource, a code resource, and a space resource. In embodiments of this application, the term "and/or" describes an association relationship between associated objects and may indicate three relationships. For example, A and/or B may indicate the following cases: Only A exists, both A and B exist, and only B exists, where A and B may be singular or plural. The character "/" generally represents an "or" relationship between the associated objects. "At least one item (piece) of the following" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. "A plurality of" means two or more.

FIG. 2 is a schematic diagram of a possible network architecture applicable to an embodiment of this application. The network architecture includes a network device and at least one terminal device.

It should be understood that the network device and the terminal device shown in FIG. 2 are merely examples, and the network device may provide a service for one or more terminal devices. A quantity of terminal devices and a quantity of network devices in a communication system are not specifically limited in embodiments of this application. The terminal device in FIG. 2 is shown by using a mobile phone as an example, but this application is not limited thereto. The terminal device may alternatively be another type of terminal device, for example, a vehicle-mounted terminal device or a vehicle.

In a communication system, a terminal device may access a network device and communicate with the network device. For example, one network device may manage one or more (for example, three or six) cells, and the terminal device may access the network device in at least one of the one or more cells, and communicate with the network device in the cell accessed by the terminal device. In embodiments of this application, "at least one" may be one, two, three, or more. This is not limited in embodiments of this application.

The term "for example" in embodiments of this application is used to represent giving an example, an illustration, or a description. Any embodiment or design scheme described as an "example" in this application should not be explained as being more preferred or having more advantages than another embodiment or design scheme. Specifically, the term "example" is used for presenting a concept in a specific manner.

Optionally, ordinal numbers such as "first" and "second" mentioned in embodiments of this application may be used to distinguish between a plurality of objects, but are not used to limit a sequence, a time sequence, priorities, or importance of the plurality of objects. For example, first information and second information are merely used to distinguish between different information, but do not indicate different content, priorities, a sending sequence, importance, or the like of the two types of information.

Wireless communication between communication devices may include wireless communication between a network device and a terminal device, wireless communication between terminal devices, and the like. In embodiments of this application, the term "wireless communication" may alternatively be "communication" for short, and the term "communication" may alternatively be referred to as "data transmission", "information transmission", or "transmission". Transmission may include sending and/or receiving. For example, transmission between a network device and a terminal device includes that the network device sends a downlink signal to the terminal device, in other words, the terminal device receives the downlink signal from the network device; and/or the terminal device sends an uplink signal to the network device, in other words, the network device receives the uplink signal from the terminal device.

In embodiments of this application, the communication between the network device and the terminal device is used as an example for description. A person skilled in the art may apply the technical solutions provided in embodiments of this application to wireless communication between another scheduling entity and a subordinate entity, for example, wireless communication between a macro base station and a micro base station, or wireless communication between a first terminal device and a second terminal device. This is not limited in embodiments of this application.

The following describes some terms in embodiments of this application, to facilitate understanding of a person skilled in the art.
(1) A terminal device may be a device that has a wireless transceiver function. The terminal device may be referred to as a terminal for short. The terminal device may be deployed on land, including an indoor or outdoor device and/or a handheld or vehicle-mounted device, may be deployed on a water surface (for example, on a ship), or may be deployed in the air (for example, on aircraft, a balloon, or a satellite). The terminal device may be user equipment (user equipment, UE), and the UE includes a handheld device, a vehicle-mounted device, a wearable device, or a computing device that has a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in unmanned driving, a wireless terminal in telemedicine, a wireless terminal in a smart grid, a wireless terminal in a smart city (smart city), a wireless terminal in a smart home (smart home), and/or the like.
   In embodiments of this application, an apparatus configured to implement a function of the terminal device may be a terminal device, or may be an apparatus that can support the terminal device in implementing the function, for example, a chip system. The apparatus may be installed in the terminal device. In embodiments of this application, the chip system may include a chip, or may include a chip and another discrete component. In the technical solutions provided in embodiments of this application, an example in which the apparatus configured to implement the function of the terminal device is the terminal device is used to describe the technical solutions provided in embodiments of this application.
(2) A network device includes a base station (base station, BS), and may be a device that is deployed in a radio access network and that can perform wireless communication with a terminal device. The base station may be in a plurality of forms, for example, a macro base station, a micro base station, a relay station, and an access point. The base station in embodiments of this application may be a base station in a 5G system or a base station in an LTE system, or a future sixth generation (6th generation, 6G) base station in a future communication system. The base station in the 5G system may also be referred to as a transmission reception point (transmission reception point, TRP) or a next generation NodeB (next generation NodeB, gNB or gNodeB).
   In embodiments of this application, an apparatus configured to implement a function of the network device may be a network device, or may be an apparatus that can support the network device in implementing the function, for example, a chip system. The apparatus may be installed in the network device. In the technical solutions provided in embodiments of this application, an example in which the apparatus configured to implement the function of the network device is the network device is used to describe the technical solutions provided in embodiments of this application.
(3) A common detection space is used by a network device to send downlink control information (downlink control information, DCI) to a terminal device. The DCI is DCI that can be detected by all terminal devices in a cell or DCI that can be detected by a group of terminal devices in the cell. For example, the common detection space is used to transmit DCI, the DCI is used to schedule a PDSCH, and the PDSCH is used to carry a message such as a system message, a paging message, a random access response (random access response, RAR), or a MsgB (message B). For example, the DCI carries a transmission parameter of the PDSCH.
   In embodiments of this application, one cell may include one or more terminal device groups. This is not limited in embodiments of this application.
(4) A dedicated detection space of a terminal device (which may also be referred to as a specific detection space of the terminal device) is used by a network device to send DCI specific to the terminal device to the terminal device. The DCI is DCI that can be detected by a group of terminal devices including the terminal device or DCI that can be detected by the terminal device. For example, the specific detection space of the terminal device is used to transmit DCI, and the DCI is used to schedule a PDSCH or a PUSCH, and/or is used for indicating a parameter such as power control information and/or frame structure configuration information. The foregoing descriptions are merely for ease of understanding. A type of a message transmitted in the dedicated detection space of the terminal device is not limited in embodiments of this application. For example, the dedicated detection space of the terminal device may also be used to transmit DCI, and the DCI is used to schedule a PDSCH that is used to carry a message such as a paging message, a RAR, or a MsgB.

For example, for a cell, for a terminal device, DCI transmitted in a common detection space is DCI that can be detected by all terminal devices in the cell; and DCI transmitted in a dedicated detection space of the terminal device is DCI that can be detected by a group of terminal devices in the cell, where the group of terminal devices includes the terminal device, and a terminal device other than the group of terminal devices in the cell cannot detect the DCI; or DCI transmitted in a dedicated detection space of the terminal device is DCI that can be detected by the terminal device, and a terminal device other than the terminal device in the cell cannot detect the DCI.

For another example, for a cell, for a terminal device, DCI transmitted in a common detection space is DCI that can be detected by all terminal devices in the cell, or DCI transmitted in a common detection space is DCI that can be detected by a group of terminal devices in the cell, where the group of terminal devices includes the terminal device, and a terminal device other than the group of terminal devices in the cell cannot detect the DCI; and DCI transmitted in a dedicated detection space of the terminal device is DCI that can be detected by the terminal device, and a terminal device other than the terminal device in the cell cannot detect the DCI.

(5) Downlink control information (downlink control information, DCI) is sent by a network device to a terminal device, and is carried on a PDCCH. The terminal device may obtain the PDCCH through blind detection, and demodulate and decode the PDCCH to obtain the DCI carried on the PDCCH.

A time-frequency resource range for blind detection of the PDCCH by the terminal device is determined based on a control resource set (CORESET) and a search space (SearchSpace). The PDCCH is scrambled by using a radio network temporary identifier (radio network temporary identifier, RNTI) known to the terminal device. During blind detection, the terminal device attempts to descramble the PDCCH by using the known RNTI. If descrambling succeeds, the terminal device may receive the PDCCH, and receive the DCI carried on the PDCCH. The CORESET and the SearchSpace are predefined in a protocol, or are configured by the network device for the terminal device by using signaling, and may be used to jointly determine the time-frequency resource range for blind detection of the PDCCH. The time-frequency resource range may include a set of candidate time-frequency resource positions of the PDCCH, and the network device may send the PDCCH to the terminal device at a candidate time-frequency resource position in the set. Because the terminal device may not know a candidate time-frequency resource position that is in the set and at which the network device sends the PDCCH to the terminal device, the terminal may perform blind detection of the PDCCH at one or more candidate time-frequency resource positions in the candidate time-frequency resource position set, the following describes in detail a process of determining the candidate time-frequency resource positions for blind detection based on the CORESET and the SearchSpace. The candidate time-frequency resource position set includes one or more candidate time-frequency resource positions.

(6) An RNTI of a terminal device may be a paging radio network temporary identifier (paging radio network temporary identifier, P-RNTI), a random access radio network temporary identifier (random access RNTI, RA-RNTI), a cell radio network temporary identifier (cell radio network temporary identifier, C-RNTI), a temporary cell radio network temporary identifier (temporary cell radio network temporary identity, TC-RNTI), or an inactive radio network temporary identifier (inactive RNTI, I-RNTI).

The I-RNTI is configured by a network side for the terminal device to use when the terminal device is in an RRC inactive mode. The I-RNTI is unique in a movement range of a terminal, the movement range is referred to as a RAN-based notification area (radio access network-based notification area), and the RAN-based notification area may include coverage of a plurality of cells.

The following describes the methods provided in embodiments of this application with reference to the accompanying drawings.

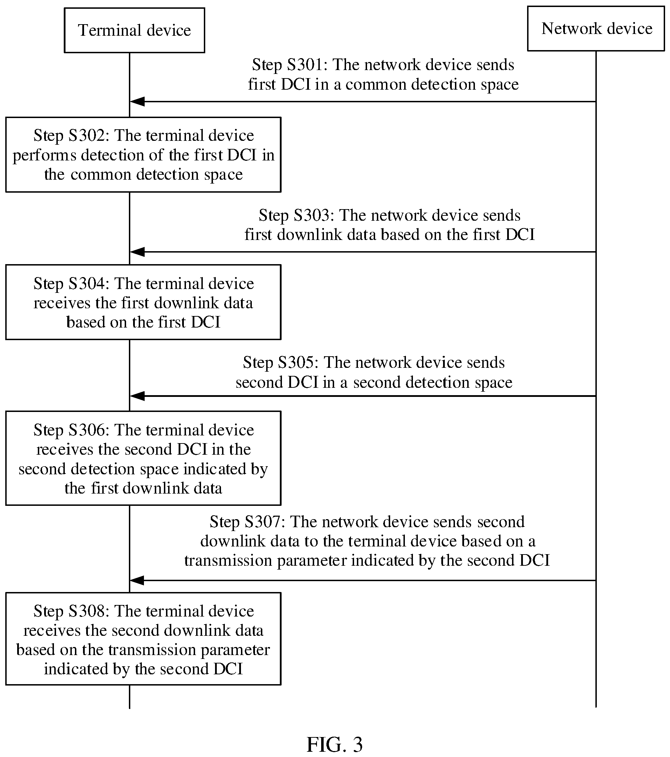

FIG. 3 shows a data transmission method according to an embodiment of this application. The method may be applied to the communication system shown in FIG. 2. For ease of description, the following describes the method by using an example in which the method is performed by a network device and a terminal device. The method includes the following steps.

Step S301: The network device sends first DCI in a common detection space, where the first DCI is used to schedule first downlink data.

Step S302: The terminal device receives the first DCI in the common detection space.

The terminal device may be in an RRC non-connected mode. Before this process, it is assumed that the terminal device has known (or has determined) a resource position of the common detection space. The resource position of the common detection space may be predetermined in a protocol, or may be configured by the network device for the terminal device. For example, a process in which the terminal device determines the resource position of the common detection space includes: The network device sends first configuration information to the terminal device, where the first configuration information is used to indicate the resource position of the common detection space. After receiving the first configuration information, the terminal device determines the resource position of the common detection space based on the first configuration information.

In embodiments of this application, the network device may configure the resource position of the common detection space for the terminal device when the terminal device is in an RRC connected mode, in other words, before the terminal device is switched to the RRC non-connected mode, where for example, the network device sends, to the terminal device, an RRC release message or an RRC pause message that carries the first configuration information; and/or the network device may configure the resource position of the common detection space for the terminal device when the terminal device is in the RRC non-connected mode, where for example, the network device sends, to the terminal device, a broadcast message (for example, a system information block (system information block, SIB) 1) that carries the first configuration information. For example, the first configuration information may be used to indicate a CORESET and a SearchSpace. The following specifically describes the CORESET and the SearchSpace.

When the terminal device receives the first DCI in the common detection space, the terminal device performs blind detection of the first DCI in the common detection space. Specifically, the terminal device may perform detection of the first DCI at one or more candidate time-frequency resource positions in the common detection space. The first DCI is used to schedule the first downlink data. For example, the first DCI is used to indicate a transmission parameter of a channel (for example, a PDSCH) that carries the first downlink data, the first DCI is DCI scrambled by the network device by using an RNTI known to the terminal device, and the terminal device descrambles the detected first DCI by using the known RNTI. For example, the terminal device knows one or more RNTIs that may be used to scramble the first DCI, and the terminal device attempts to descramble the first DCI by using at least one of the one or more RNTIs. If the first DCI is successfully descrambled by using one of the one or more RNTIs, the terminal device may obtain the transmission parameter of the channel carrying the first downlink data, to determine a resource position of the channel carrying the first downlink data.

In embodiments of this application, scrambling the first DCI by using the RNTI of the terminal device includes: scrambling, by using the RNTI, a cyclic redundancy check (Cyclic Redundancy Check, CRC) of a PDCCH carrying the DCI.

Step S303: The network device sends the first downlink data to the terminal device.

For example, the network device sends the first downlink data based on the transmission parameter of the first downlink data.

The first downlink data is used to indicate a configuration of a new detection space. The first downlink data may be a paging message, a random access response (random access response, RAR), or a MsgB (message B).

In embodiments of this application, the RAR may be a message 2 sent by the network device to the terminal device when the terminal device accesses the network device according to a four-step access method. The four-step access method is described as follows: Step 1: The terminal device sends an access preamble (preamble) to the network device through a physical random access channel (physical random access channel, PRACH), in other words, sends a message 1 to the network device. Step 2: After receiving the access preamble, the network device sends the random access response RAR to the terminal device, in other words, the network device sends the message 2 to the terminal device, where the RAR may indicate a resource position of a PUSCH and/or the access preamble received by the network device in step 1. Step 3: The terminal device sends a message 3 to the network device through the PUSCH based on the resource position that is of the PUSCH and that is indicated by the message 2. Step 4: After receiving the message 3, the network device may send a message 4 to the terminal device. Optionally, the message 3 may include an RRC setup request (RRCSetupRequest) message or an RRC resume request (RRCResumeRequest) message. Optionally, the message 4 may include one or more of the following information: an RRC setup (RRCSetup) message, an RRC resume (RRCResume) message, an acknowledgement (acknowledgement)/a negative acknowledgement (negative acknowledgement, NACK) of the PUSCH in the message 3, and a power control command.

In embodiments of this application, the message B may be a message sent by the network device to the terminal device when the terminal device accesses the network device according to a two-step access method. Step 1: The terminal device sends an access preamble (preamble) to the network device through a PRACH, and may send uplink data to the network device through a PUSCH, in other words, the terminal device sends a message A to the network device. Step 2: After receiving the message A, the network device sends the message B to the terminal device. Optionally, the message A may include an RRC setup request (RRCSetupRequest) message or an RRC resume request (RRCResumeRequest) message. Optionally, the message B may include one or more of the following information: an RRC setup (RRCSetup) message, an RRC resume (RRCResume) message, an ACK/a NACK of the PUSCH in the message A, and a power control command.

For example, if a mode of the terminal device is the RRC non-connected mode, the network device may initiate paging to the terminal device in the common detection space. In this case, the first downlink data may be a message scheduled by using any type of DCI that can be carried in the common detection space, for example, the paging message, and a channel carrying the paging message is a PDSCH. The network device sends, in the common detection space, the first DCI used to schedule the paging message, where the first DCI is used to indicate a transmission parameter of the PDSCH that carries the paging message. Specifically, the first DCI is DCI scrambled by using a P-RNTI known to the terminal device. The terminal device performs detection of the first DCI in the common detection space, and descrambles the first DCI based on the P-RNTI. A resource position indicated by the first DCI is a resource position of the PDSCH that carries the paging message. The paging message may be the first downlink data, and the first downlink data is used to indicate a configuration of a second detection space. Optionally, the first downlink data may alternatively be the RAR or the MsgB. The following separately describes cases in which the first downlink data is the paging message, the RAR, or the MsgB.

Step S304: The terminal device receives the first downlink data based on the received first DCI.

The terminal device receives the first downlink data based on the transmission parameter indicated by the first DCI. The first downlink data is used to indicate the second detection space to the terminal device. For example, the first downlink data may include second configuration information of the second detection space. The terminal device may determine a resource position of the second detection space based on the second configuration information. For example, the second configuration information is used to indicate a CORESET and a SearchSpace. The following describes the CORESET and the SearchSpace in detail.

Step S305: The network device sends second DCI in the second detection space.

Specifically, the network device sends the second DCI in the second detection space indicated by the first downlink data. For example, the second DCI is DCI scrambled by using an RNTI known to the terminal device, for example, a temporary RNTI (namely, a TC-RNTI) allocated by the network device to the terminal device. The TC-RNTI may be carried in the first downlink data, and the terminal device descrambles the second DCI based on the TC-RNTI included in the first downlink data.

In this application, the second DCI is used to schedule second downlink data. For example, the second DCI carries a transmission parameter of a channel carrying the second downlink data.

Step S306: The terminal device receives the second DCI in the second detection space.

Specifically, the terminal device performs detection of the second DCI in the second detection space indicated by the first downlink data received from the network device. For example, the first downlink data includes the TC-RNTI allocated by the network device to the terminal device, and the terminal device descrambles the detected second DCI by using the TC-RNTI, to obtain the transmission parameter that is of the channel carrying the second downlink data and that is carried in the second DCI, and determine a resource position of the channel carrying the second downlink data.

Step S307: The network device sends the second downlink data to the terminal device.

Specifically, the network device sends the second downlink data based on the transmission parameter of the second downlink data, where the second downlink data is data specific to the terminal device.

Step S308: The terminal device receives the second downlink data based on the second DCI.

The following describes the specific implementation method shown in FIG. 3 by using specific embodiments.

Embodiment 1: The transmission parameter of the second downlink data is indicated by using the paging message.

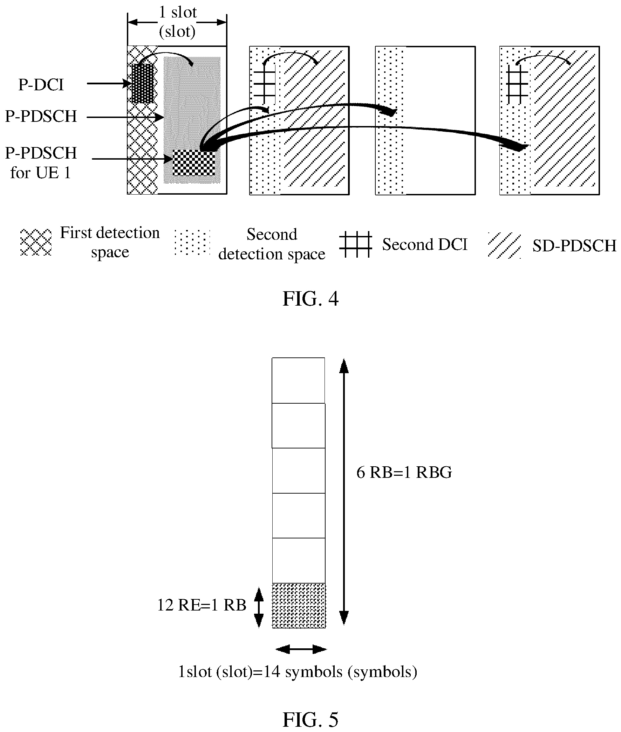

FIG. 4 is a schematic diagram of an application scenario according to an embodiment of this application. For example, each large block in FIG. 4 represents a time unit, for example, a slot (slot). The following explains and describes some communication terms in FIG. 4.
(1) P-DCI is DCI scrambled by using a P-RNTI. The P-DCI may be group common DCI (Group Common DCI) or DCI specific to a terminal device, and is used to schedule a paging message. The paging message is carried on a P-PDSCH. The P-DCI corresponds to the first DCI in the method procedure shown in FIG. 3. The P-DCI may be received by all terminal devices in a cell, or may be received by a group of terminal devices including the terminal device.
(2) A P-PDSCH is a PDSCH carrying a paging message, is scheduled by using P-DCI, and may be a common downlink data channel. Optionally, the paging message includes an identifier of one or more paged terminal devices. Optionally, the paging message includes data sent by a network device to the paged terminal device. For example, the paging message includes an ID of the paged terminal device and data corresponding to the ID. For example, a P-PDSCH for UE 1 in FIG. 4 refers to a P-PDSCH or data of UE 1. Optionally, the P-PDSCH in FIG. 4 may further include a P-PDSCH for UE 2 that refers to data or a P-PDSCH of UE 2 that is carried on the P-PDSCH. The P-PDSCH for UE 2 is not shown in FIG. 4.
(3) A P-PDSCH for UE 1 is carried in a paging message, refers to data of UE 1, and corresponds to the PDSCH that carries the first downlink data in the method procedure shown in FIG. 3, that is, the first downlink data in this embodiment is the paging message. It is assumed that UE 1 is the terminal device in the method procedure shown in FIG. 3.
(4) An SD-PDSCH is a PDSCH carrying downlink data, is a non-public downlink data channel, and is used to transmit data specific to a terminal device, for example, the second downlink data in the method procedure shown in FIG. 3. The SD-PDSCH corresponds to the PDSCH carrying the second downlink data in the method procedure shown in FIG. 3.

The following describes a specific implementation process of the method shown in FIG. 3 of this application with reference to the scenario shown in FIG. 4. In the scenario shown in FIG. 4, a network device and a terminal device mainly perform the following procedure.

Step 1: The network device sends P-DCI in a first detection space.

The first detection space may be a common detection space, or may be a dedicated detection space of the terminal device. That the first detection space is a common detection space is used as an example. The common detection space includes one or more candidate resource positions of a PDCCH. The terminal device may perform blind detection in the common detection space of the PDCCH, to receive scheduling information of the network device. For example, the scheduling information is DCI (namely, P-DCI) used to schedule a paging message, and the P-DCI may be used to schedule the terminal device in an RRC idle mode or an RRC inactive mode to receive the paging message. Therefore, when the network device has a data transmission requirement with the terminal device, for example, when the terminal device has a corresponding call or data that needs to be received, the network device may notify the terminal device to set up an RRC connection to the network device.

As described above, a resource position of the first detection space is known to the terminal device. For example, the resource position is predefined in a protocol, or may be configured by the network device. For example, the first detection space is determined based on both a first CORESET and a first SearchSpace. A process in which the network device configures the resource position of the first detection space for the terminal device includes: The network device sends first configuration information to the terminal device, where the first configuration information is used to indicate configuration information of the first CORESET and the first SearchSpace. Correspondingly, the terminal device determines the resource position of the first detection space based on the configuration information, indicated by the first configuration information, of the first CORESET and the first SearchSpace. A process of determining the resource position based on the first CORESET and the first SearchSpace is described in detail below, and details are not described herein.

Step 2: The terminal device performs blind detection of the P-DCI in the first detection space.

The terminal device determines the resource position of the first detection space based on a protocol predefinition or based on the first configuration information sent by the network device. The resource position includes a plurality of candidate time-frequency resource positions, and the terminal device performs blind detection of the PDCCH at the plurality of candidate time-frequency resource positions, to perform blind detection of the P-DCI.

Step 3: The network device sends the paging message (namely, a P-PDSCH in FIG. 4) at a resource position indicated by the P-DCI.

Step 4: The terminal device receives the P-PDSCH at the resource position indicated by the P-DCI.

In embodiments of this application, the P-PDSCH carries first downlink data to be sent to the terminal device, for example, a P-PDSCH for UE 1. The P-PDSCH for UE 1 is used to indicate a resource position of a second detection space. For example, the P-PDSCH for UE 1 includes the foregoing second configuration information used to determine the resource position of the second detection space. Alternatively, the P-PDSCH for UE 1 includes an index value of the foregoing second configuration information used to determine the resource position of the second detection space. The terminal device determines, based on preset correspondences between different index values and second configuration information, the second configuration information corresponding to the index value indicated by the P-PDSCH for UE 1.

Step 5: The terminal device determines the resource position of the second detection space based on the second configuration information.

As described above, the second configuration information includes a CORESET and a SearchSpace, and the terminal device determines the resource position of the second detection space based on both the CORESET and the SearchSpace that are indicated by the P-PDSCH for UE 1.

The following uses the CORESET and the SearchSpace that are included in the second configuration information as examples to describe a CORESET and a SearchSpace in detail.

### 1. CORESET

Configuration information of the CORESET includes but is not limited to one or more of the following information.
(1) Time domain resource duration (duration) is a quantity of symbols occupied by a target resource. Optionally, a value range of the parameter is 1 to 3. The target resource herein is a resource configured by using the parameter. For example, when the CORESET is a second CORESET, the target resource is a resource of the second detection space. Optionally, the time domain resource duration may be preconfigured.
(2) Frequency domain resource position (frequencyDomainResources): The network device may indicate, by using a bitmap (bitmap), an available resource block group (RBG (RB Group), including six consecutive RBs in frequency domain) in a band (band) used by the terminal device. The band used by the terminal device may be a band on which the terminal camps, to be specific, a band on which a synchronization signal block (synchronization signal block, SSB) broadcast by the network device can be found by the terminal device. The band is a frequency domain resource of a cell on which the terminal device camps, or a frequency domain resource of a bandwidth part on which the terminal device camps.

The following describes the RBG.

As shown in FIG. 5, one RBG includes one or more (for example, six) RBs in frequency domain, one RB includes 12 subcarriers in frequency domain, and one subcarrier in frequency domain and one symbol in time domain correspond to one RE (resource element). The RE is a minimum time-frequency resource unit used to map a channel/signal to a time-frequency resource for transmission.

Each bit in the bitmap is used to indicate whether a corresponding RBG belongs to a target resource. For example, the bitmap corresponds to all RBGs in the bandwidth part on which the terminal device camps. For a bit in the bitmap, if a value of the bit is a first value (for example, "1"), it indicates that an RBG corresponding to the bit belongs to the target resource; if a value of the bit is a second value (for example, "0"), it indicates that an RBG corresponding to the bit does not belong to the target resource. It should be noted that the foregoing is merely an example. Alternatively, when a value of the bit is "0", it indicates that an RBG corresponding to the bit belongs to the target resource; when a value of the bit is "1", it indicates that an RBG corresponding to the bit does not belong to the target resource. The value of the bit and a rule of correspondence are not limited in embodiments of this application.

### 2. SearchSpace

Configuration information of the SearchSpace includes but is not limited to one or more of the following information.
(1) A periodicity and an offset in the periodicity (monitoringSlotPeriodicityAndOffset) are represented by a quantity of slots, and includes a monitoring periodicity (Periodicity) and an offset (Offset).

A value of the monitoring periodicity is a quantity of slots included in one monitoring periodicity.

The offset (Offset) is an offset between a start slot occupied by a target resource in each monitoring periodicity and a start slot of the monitoring periodicity. Optionally, the offset may be preconfigured, and a configured value may be 0 or another integer.

(2) Monitoring slot duration (duration) is duration of slots occupied by a target resource, or a quantity of slots occupied by the target resource. Optionally, the monitoring slot duration may be preconfigured.

(3) A monitoring symbol position (monitoringSymbolsWithinSlot) is an offset between a start symbol occupied by a target resource in each slot in which the target resource is located and a start symbol of the slot. Optionally, the monitoring symbol position may be preconfigured, and a configured value may be 0 or another integer.

For ease of differentiation, in embodiments of this application, the duration included in the CORESET is referred to as duration 1, and the duration included in the SearchSpace is referred to as duration 2.

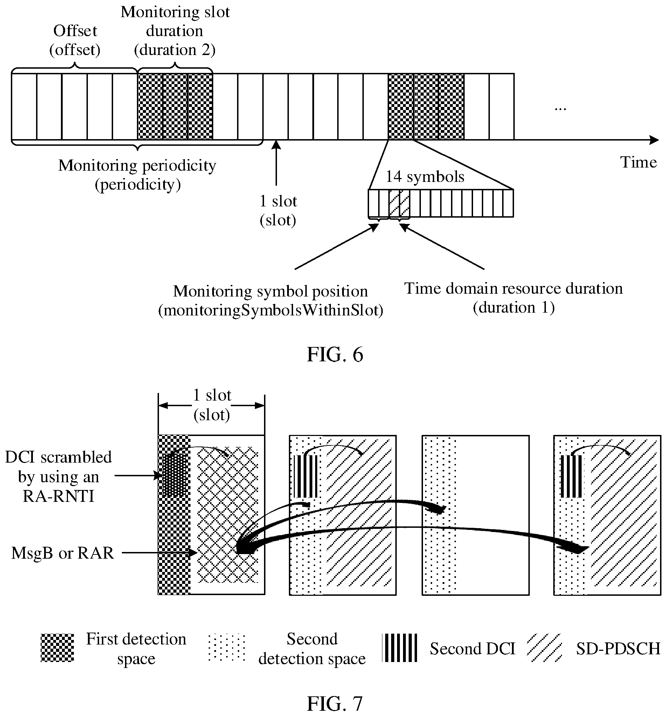

For example, FIG. 6 is a schematic diagram of determining the resource position of the second detection space based on configuration parameters that are of the second CORESET and a second SearchSpace and that are shown in Table 1 according to an embodiment of this application.

**Table 1**

| CORESET | | SearchSpace | | | |
|---|---|---|---|---|---|
| frequencyDomainRes ources | Duration 1 | Periodicity | Offset | Duration 2 | monitoringSymbolsWithinSlot |
| 10011001110011 | 2 | 10 | 5 | 3 | 1 |

It should be noted that FIG. 6 does not show all groups of RBGs that belong to or do not belong to the target resource and that correspond to a bitmap that represents frequencyDomainResources. FIG. 6 shows frequency domain resources that are only one group of RBGs that belong to the target resource, and time domain resources that correspond to the group of RBGs and that belong to the target resource. It may be understood that, in FIG. 6, one RBG corresponds to one bit in the bitmap. For example, if the bit is 1, it indicates that the RBG is a frequency domain resource in the second detection space (the target resource); if the bit is 0, it indicates that the RBG is not a frequency domain resource in the second detection space.

The following uses the group of RBGs shown in FIG. 6 and the parameters shown in Table 1 as an example to describe a procedure of determining the time domain resources that correspond to the group of RBGs and that belong to the target resource.

In FIG. 6, each larger rectangular box displayed in an axis representing time represents one slot, and each rectangular box filled with checkerboard pattern represents a slot that belongs to the target resource. The target resource herein is a resource that belongs to the second detection space. In FIG. 6, each smaller rectangular box filled with oblique grids represents a symbol that belongs to the target resource.

Refer to FIG. 6. The periodicity of the SearchSpace in Table 1 is 10, indicating that each monitoring periodicity includes 10 slots.

The offset of the SearchSpace in Table 1 is 5, indicating that an offset between a position of a start slot occupied by a target resource in each monitoring periodicity and a start slot of the monitoring periodicity in which the target resource is located is 5. In other words, a start slot (a rectangular box with checkerboard pattern) occupied by the target resource in FIG. 6 is the sixth slot in each monitoring periodicity.

The duration 2 of the SearchSpace in Table 1 is 3, indicating that slot duration of the target resource in each monitoring periodicity is 3, in other words, the target resource includes three consecutive slots. Slots of the target resource are determined based on the determined position of the start slot of the target resource. In correspondence to FIG. 6, the target resource is the sixth to the eighth slots (in other words, rectangular boxes with checkerboard pattern) in each monitoring periodicity.

The monitoringSymbolsWithinSlot of the SearchSpace in Table 1 is 2, indicating that an offset between a start symbol occupied by a target resource in each slot and a start symbol of the slot is two symbols. To be specific, in FIG. 6, one slot in which a target resource is located is used as an example, and a start symbol of the target resource in the slot is the third symbol.

The duration 1 of the CORESET in Table 1 is 2, indicating that a quantity of symbols of the target resource that are in the slot in which the target resource is located is 2. Symbols occupied by the target resource are determined based on the determined position of the start symbol of the target resource. In correspondence to FIG. 6, symbols occupied by the target resource are the third symbol and the fourth symbol (that is, rectangular boxes with oblique grids).

The foregoing parameters are all used to determine the resource position of the second detection space, namely, one or more candidate time-frequency resource positions for blind detection of the DCI by the terminal device. For example, a time-frequency resource represented by a rectangular block with checkerboard pattern in FIG. 6 is a candidate time-frequency resource position for blind detection of the DCI. For another example, a time-frequency resource represented by a rectangular block with oblique grids in FIG. 6 is a candidate time-frequency resource position for blind detection of the DCI, and each rectangular block with checkerboard pattern has such two time-frequency resources for blind detection of the DCI

The network device may send a PDCCH to the terminal device at one of the candidate time-frequency resource positions, and the terminal may perform blind detection of the P-DCI at the one or more candidate time-frequency resource positions.

The foregoing is merely an example. Specific configuration parameters of the CORESET and the SearchSpace are not limited in this application. Optionally, a part or all of the configuration parameters of the CORESET and the SearchSpace may alternatively be predefined in a protocol. For example, configuration parameters included in the CORESET are predetermined in a protocol, and configuration parameters included in the SearchSpace are configured by the network device for the terminal device.

The foregoing describes specific steps of determining the resource position of the second detection space based on the configuration parameters of the second CORESET and the second SearchSpace. For example, the network device may configure the resource position of the second detection space for the terminal device based on the first downlink data. The following uses the first downlink data as an example to describe a manner of indicating the resource position of the second detection space based on the first downlink data.

Indication manner 1: The first downlink data carries the configuration parameters of the second CORESET and/or the configuration parameters of the second SearchSpace that are used to determine the resource position of the second detection space.

For example, different fields in the first downlink data are used to indicate values of a part or all of the configuration parameters included in the second CORESET and/or the second SearchSpace. In other words, the first downlink data includes one or more of the frequencyDomainResources, the duration 1, the periodicity, the duration 2, and the monitoringSymbolsWithinSlot. A parameter that is not included in the first downlink data may be predefined in a protocol, or may be configured by the network device by using other signaling, for example, RRC signaling such as an RRC release message or an RRC pause message. This is not limited in embodiments of this application.

Indication manner 2: The first downlink data carries an index value corresponding to a combination of configuration information of the second CORESET and the second SearchSpace that are used to determine the resource position of the second detection space.

For example, in embodiments of this application, a first correspondence between different combinations of configuration information of the second CORESET and the second SearchSpace and different index values may be preset. Table 2 shows a specific example of a possible applicable first correspondence provided in embodiments of this application.

**Table 2**

| | CORESET | | SearchSpace | | | |
|---|---|---|---|---|---|---|
| Index | frequencyDomainReso urces | Duration 1 | Periodicity | Offset | Duration 2 | monitoringSymbolsWithi nSlot |
| 1 | 10011001110011 | 3 | 10 | 5 | 3 | 1 |
| 2 | 11111011101111 | 2 | / | / | 10 | 0 |
| 3 | 01011100111011 | 0 | 6 | 8 | 4 | 2 |

The first downlink data sent by the network device carries the index value corresponding to the combination of the configuration information of the second CORESET and the second SearchSpace. After receiving the first downlink data, the terminal device matches, based on the first correspondence the same as that of the network device, the configuration information, of the second CORESET and the second SearchSpace, that corresponds to the index value carried in the received first downlink data.

For example, Table 2 is used as an example, and the index value carried in the first downlink data is 1. In this case, the terminal device determines, based on the first correspondence shown in Table 2 and the index value 1 carried in the received first downlink data, values of the configuration parameters included in the second CORESET and the second SearchSpace. For example, the duration 1 is 3, and the periodicity is 10. For brevity, examples are not listed one by one herein.

/ in Table 2 indicates that the first correspondence does not include a value of a configuration parameter. The value of the configuration parameter may be predefined based on a protocol, or may be configured by using other signaling such as RRC signaling, or may be configured by using the first downlink data, to be specific, the value of the configuration parameter is not determined by the index value carried in the first downlink data, but a specific value of the configuration parameter is carried in the first downlink data. In other words, the first downlink data may carry the index value, and may further carry values of a part or all of the configuration parameters included in the second CORESET and/or the second SearchSpace.

Embodiments of this application may include a combined solution. The combined solution includes: A parameter value of a part or all of the configuration parameters is indicated by the first downlink data, an index value of a part or all of the configuration parameters is indicated by the first downlink data, and/or a part or all of the parameters are predefined (preconfigured).

For example, Table 2 is used as an example. The first downlink data carries the index value corresponding to the combination of the configuration information of the second CORESET and the second SearchSpace, and the index value is 2. The first downlink data further carries a value indication of the periodicity. The offset is predefined based on a protocol. Correspondingly, the terminal device matches, based on Table 2, the configuration information that is of the second CORESET and the second SearchSpace and that corresponds to the index value 2, to be specific, matches the frequencyDomainResources as 11111011101111, the duration 1 as 2, the duration 2 as 10, and the monitoringSymbolsWithinSlot as 0, determines a value of the periodicity based on the value indication of the periodicity carried in the first downlink data, and determines a value of the offset based on a definition of the offset in the protocol.

In embodiments of this application, the first correspondence may be predefined in a protocol, or may be configured by the network device for the terminal, for example, configured by using RRC signaling, for example, configured by using an RRC release message or an RRC pause message. This is not limited in embodiments of this application.

The terminal device determines, based on the first downlink data, one or more candidate time-frequency resource positions that are in the second detection space, and performs blind detection of second DCI at the one or more candidate time-frequency resource positions.

In an optimized solution, in embodiments of this application, a valid number and/or valid time may be further configured for the second detection space.

The valid time is used to indicate a valid time period, from a specified start time point to a valid time point, in which the resource position of the second detection space is determined based on the configuration information of the second CORESET and the second SearchSpace. For example, the valid time is 100 ms, and the specified start time point is the last slot that carries information about the valid time. Within 100 ms after the specified start time point, a configuration corresponding to the valid time is valid. After 100 ms, the configuration of the second detection space is invalid, in other words, the second detection space indicated by the first downlink data is invalid. It should be noted that the foregoing is merely an example, and the specified start time point is not limited in this application. For example, the specified start time point may alternatively be the last slot in which the first downlink data used to indicate the resource position of the second detection space is located.

The valid number is used to indicate a quantity of times that the terminal device performs detection of the second DCI in the second detection space, or is used to indicate a quantity of times that the terminal device detects the second DCI in the second detection space, or is used to indicate a quantity of times that the terminal device receives an SD-PDSCH.

For example, it is assumed that the valid number is 3, and the valid number is used to indicate the quantity of times that the terminal device performs detection of the second DCI in the second detection space. FIG. 4 is used as an example. After determining the second detection space based on the first downlink data, the terminal device performs detection in the second detection space. As shown in FIG. 4, regardless of whether the second DCI is detected, after the quantity of times that the terminal device performs detection of the second DCI in the second detection space reaches 3, the resource position that is of the second downlink space and that is determined by the terminal device is invalid.

If the valid number is used to indicate the quantity of times that the terminal device detects the second DCI in the second detection space, in FIG. 4, the terminal device detects the second DCI only twice, and the resource position of the second detection space is still valid, in other words, the terminal device may further receive one piece of second DCI at the determined resource position of the second detection space.

If the valid number is used to indicate the quantity of times that the terminal device receives an SD-PDSCH, after the terminal device receives three SD-PDSCHs, the resource position that is of the second detection space and that is determined by the terminal device is invalid.

The foregoing descriptions are merely examples, and a configuration corresponding to the valid time or the valid number is not limited in embodiments of this application.

Step 6: The network device sends the second DCI in the second detection space, where the second DCI is used to schedule second downlink data.

Specifically, the second DCI carries a transmission parameter of a channel carrying the second downlink data, and the transmission parameter is used to determine a transmission parameter of the channel.

Step 7: The terminal device performs detection of the second DCI in the second detection space.

Specifically, the terminal device performs blind detection at each candidate time-frequency resource position that is in the second detection space and that is determined in step 5, to obtain the second DCI.

In embodiments of this application, the second DCI may be DCI scrambled by using any RNTI known to the terminal device. For ease of description, any RNTI known to the terminal device is referred to as an X-RNTI below.

Specifically, the X-RNTI may be any one of the following RNTIs.
(1) A group common RNTI: an RNTI shared by a plurality of terminals, for example, an RNTI of one or more terminal device groups. To be specific, the one or more terminal device groups may use the RNTI (for example, a P-RNTI) to descramble DCI.
(2) A dedicated RNTI of the terminal device: a dedicated RNTI configured for one terminal device. To be specific, only one terminal device can use the dedicated RNTI, for example, a C-RNTI, a TC-RNTI, or an I-RNTI, to descramble DCI.

It should be understood that the X-RNTI is any RNTI known to the terminal device, and may be predefined based on a protocol, or may be configured by the network device for the terminal device. The following lists several manners in which the network device configures an RNTI for the terminal device.

Configuration manner 1: The network device performs configuration by using higher layer signaling.

For example, the network device configures the RNTI for the terminal device by using higher layer signaling such as RRC signaling. Specifically, the RRC signaling may be an RRC release message or an RRC pause message.

Configuration manner 2: The network device performs configuration based on the first downlink data.

For example, the first downlink data sent by the network device, for example, the P-PDSCH in FIG. 4, carries the RNTI allocated to the terminal device.

Configuration manner 3: The network device performs configuration based on a system message.

For example, the network device includes the RNTI configured for the terminal device in the system message, and broadcasts the system message to a plurality of terminal devices.

The group common RNTI may be configured in any one of the configuration manner 1 to the configuration manner 3. The dedicated RNTI of the terminal device may be configured in the configuration manner 1 or the configuration manner 2. When the dedicated RNTI of the terminal device is configured in the configuration manner 2, the first downlink data that carries the dedicated RNTI of the terminal device may be data specific to the terminal device, or the first downlink data is carried in the dedicated detection space of the terminal device.

Step 8: The network device sends the second downlink data based on the transmission parameter of the second downlink data, where the second downlink data is data specific to the terminal device.

Refer to FIG. 4. The second downlink data is carried on the SD-PDSCH.

Step 9: The terminal device receives the second downlink data based on the second DCI.

The foregoing procedure includes a process in which the network device pages the terminal device in the first detection space. A resource space for initiating paging is not limited in embodiments of this application. For example, the first detection space may be the common detection space, or may be the dedicated detection space of the terminal device. A method procedure of implementing the common detection space may be the same as that of implementing the dedicated detection space of the terminal device. A difference lies in that the common detection space may be a resource space for detection performed by any terminal device. For different terminal devices or a same group of terminal devices, resource positions of the space are the same, but resource positions of dedicated detection spaces of different terminal devices or different terminal device groups are different. This may be understood as that the dedicated detection space of the terminal device is a resource space dedicated to the terminal device or a group of terminal devices. Therefore, when the technical solutions of this application are implemented in the dedicated detection space of the terminal device, data of the terminal device in the RRC idle mode or the RRC inactive mode is flexibly scheduled, and data transmission security is further improved.

It should be understood that, when the terminal device is in the RRC idle mode or the RRC inactive mode, the network device releases the RRC connection to the terminal device, and the terminal device no longer reports position information of the terminal device. Therefore, in an optional scenario, the network device that performs the foregoing method procedure in embodiments of this application may not be a network device in a cell in which the terminal device in an RRC non-connected mode is currently located. In this scenario, a plurality of network devices may perform the foregoing procedure. For example, a position at which the terminal device switches from the RRC connected mode to the RRC non-connected mode is determined, and the method procedure performed by the network device in FIG. 3 or Embodiment 1 is performed by some or all network devices whose distances from the position are within an area range of a preset distance. In another implementation, a network side determines a cell in which the terminal device is located, and a network device in the cell performs the method procedure performed by the network device in FIG. 3 or Embodiment 1. For example, when the network device is a base station, the network device that performs the technical solution of this application may be a serving base station of the cell in which the terminal device is located.

For example, when a cell in which the terminal device in the RRC non-connected mode is located is to be determined, if the terminal device is in the RRC inactive mode, as described above, because a core network knows a network device or network devices with a coverage range or a management range in which the terminal device is located, and knows a base station or base stations via which the terminal device can be located or found, a core network device may further determine the cell in which the terminal device is located. If the terminal device is in the RRC idle mode or the RRC inactive mode, a plurality of network devices may jointly initiate paging to the terminal device, and determine, based on an answer message of the terminal device, a cell in which the terminal device is located, to determine the cell in which the terminal device is located.

For example, the step in which a plurality of network devices jointly determine a cell in which the terminal device is located may include the following steps.

Step a: The network side (including one or more network devices) initiates paging to the terminal device. For example, a plurality of network devices send paging messages to the terminal device, or send downlink messages to the terminal device in another downlink transmission manner corresponding to the RRC idle mode or the RRC inactive mode. For example, the network side sends a downlink message dedicated to the terminal device in a dedicated detection space configured for the terminal in the RRC idle mode or the RRC inactive mode.

Step b: The terminal device receives paging from the network side or the downlink message that is in another form, and sends uplink feedback information to the network side, to notify the network side of the cell in which the terminal device is located. For example, the uplink feedback information may be a preamble or a PUSCH. For example, if the uplink feedback information is a preamble, the preamble may be dedicated to the terminal device, or may be sent on a time-frequency resource dedicated to the terminal device. Therefore, the network side may determine, based on the detected preamble or a time-frequency resource position of the detected preamble, that the detected preamble is sent by the terminal device, to determine the cell in which the terminal device is located. For another example, if the uplink feedback information is a PUSCH, a time-frequency resource of the PUSCH may be dedicated to the terminal device, or the PUSCH carries an ID of the terminal device. Therefore, the network side may determine, based on the ID in the received PUSCH or a time-frequency resource position of the received PUSCH, the cell in which the terminal device is located.

Step c: The network side receives the uplink feedback information of the terminal device, to determine the cell in which the terminal device is located, and a network device in the cell in which the terminal device is located performs the method procedure performed by the network device in FIG. 3 or Embodiment 1.

In step c, if the uplink information received by the network side device from the terminal device is a preamble, for the network side device, it may be considered that the terminal device initiates one random access procedure.

For example, in a random access procedure, the terminal device first sends the preamble to the network device, and then the network device may send a random access response (random access response, RAR) to the terminal device. It should be understood that the random access procedure includes 4-step random access (4-step RACH) and 2-step random access (2-step RACH). Response information sent by the network device to the terminal device in the second step in the 4-step RACH may be referred to as a RAR (or a Msg2) in the 4-step RACH, and is referred to as a MsgB in the 2-step RACH. It should be understood that the MsgB may also include the RAR.

Therefore, an embodiment of this application provides another technical solution for the foregoing scenario. To be specific, for the preamble received when the network side pages the terminal device, the network device indicates the resource position of the second detection space based on the MsgB or the RAR. The following provides specific descriptions in Embodiment 2.

Embodiment 2: The transmission parameter of the second downlink data is indicated by using the RAR or the MsgB.

FIG. 7 is a schematic diagram of a corresponding scenario for the method procedure in FIG. 3 according to an embodiment of this application. For example, each large block in FIG. 7 represents a time unit (for example, a slot). DCI scrambled by using an RA-RNTI in FIG. 7 corresponds to the first DCI in the method procedure shown in FIG. 3. Carrying a RAR or a MsgB in FIG. 7 corresponds to carrying the first downlink data in the method procedure shown in FIG. 3. An SD-PDSCH is a PDSCH that carries second downlink data.

Similar to Embodiment 1, before initiating paging, a network device configures a first detection space for a terminal device. The first detection space may be located in a common detection space or a dedicated detection space of the terminal device. Specifically, the first detection space may be a detection space that is of a PDCCH and in which the terminal device receives control information of the RAR or the MsgB in a random access procedure.

For a manner in which the network device sends first resource configuration information of the first detection space to the terminal device and the terminal device determines a resource position of the first detection space based on the first resource configuration information, refer to specific descriptions in Embodiment 1. Details are not described herein again.

In the scenario shown in FIG. 7, the network device and the terminal device mainly perform the following procedure.

Step 1: The network device sends, in the first detection space, the DCI scrambled by using the RA-RNTI, where the DCI is used to schedule the RAR or the MsgB.

For the RA-RNTI, it should be understood that the network device and the terminal device may obtain, through calculation and based on a preamble and a sending time point that are sent by the terminal device, the RA-RNTI corresponding to the terminal device, and calculation results of the network device and the terminal device are the same, in other words, an RA-RNTI obtained by the network device through calculation is the same as an RA-RNTI obtained by the terminal device through calculation. Therefore, the RA-RNTI may be predefined in a protocol or configured by the network device, or may be determined by the terminal device through calculation.

Step 2: The terminal device performs, in the first detection space, detection of the DCI scrambled by using the RA-RNTI.

Step 3: The network device sends the RAR or the MsgB at a resource position indicated by the DCI that is scrambled by using the RA-RNTI, where the RAR or the MsgB is used to indicate a resource position of a second detection space.

For a manner of indicating the resource position of the second detection space based on the RAR or the MsgB, refer to specific descriptions of the indication manner 1 or the indication manner 2 in the foregoing Embodiment 1, and details are not described herein again.

In addition to indicating the resource position of the second detection space, the RAR or the MsgB may further carry an RNTI allocated to the terminal device, for example, a TC-RNTI. The TC-RNTI may be used to scramble second DCI. This is described below.

Whether the network device sends the RAR or the MsgB may be determined based on a random access procedure initiated by the terminal device. For example, if the terminal device initiates a 4-step RACH, the network device may send the RAR to the terminal device; if the terminal device initiates a 2-step RACH, the network device may send the MsgB to the terminal device.

Step 4: The terminal device receives the RAR or the MsgB based on the resource position indicated by the DCI that is descrambled by using the RA-RNTI, and determines the resource position of the second detection space based on the RAR or the MsgB.

For a manner in which the terminal device determines the resource position of the second detection space based on the RAR or the MsgB, refer to related descriptions in the foregoing Embodiment 1. Details are not described herein again.

Similarly, in Embodiment 2, a valid number or valid time of the resource position of the second detection space indicated by the RAR or the MsgB may be further configured. For details, refer to the related descriptions in Embodiment 1. Details are not described herein again.

Step 5: The network device sends the second DCI in the second detection space indicated by the RAR or the MsgB, where the second DCI is used to schedule the second downlink data.

As described above, the second DCI may be scrambled by using an X-RNTI. The X-RNTI may be any RNTI known to the terminal device described above. Refer to related descriptions of the X-RNTI. Details are not described herein again. In addition, the X-RNTI may alternatively be a TC-RNTI that is carried in the RAR or the MsgB and that is allocated by the network device to the terminal device. In an optional implementation, when the RAR or the MsgB carries the TC-RNTI, it may mean that the network device indicates the terminal device to descramble the second DCI by using the TC-RNTI.

Specifically, the second DCI carries a transmission parameter of the second downlink data, and is used to determine a resource position of the SD-PDSCH that carries the second downlink data.

Step 6: The terminal device performs detection of the second DCI in the second detection space, and determines, based on the second DCI, a transmission parameter of the SD-PDSCH that carries the second downlink data.

Step 7: The network device sends, based on the transmission parameter of the SD-PDSCH, the SD-PDSCH that carries the second downlink data, where the second downlink data is data specific to the terminal device.

Step 8: The terminal device receives, based on the transmission parameter indicated by the second DCI, the SD-PDSCH that carries the second downlink data.

For a manner in which the network device sends the second downlink data in step 7 and a manner in which the terminal device receives the second downlink data based on the second DCI in step 8, refer to related descriptions in the foregoing embodiment. Details are not described herein again.

A first data transmission method provided in embodiments of this application is described in detail above according to Embodiment 1 and Embodiment 2. In the foregoing method, when the terminal device is in the RRC non-connected mode, the network device indicates the second detection space of the second DCI based on the paging message, the MsgB, or the RAR, and schedules the second downlink data based on the second DCI, to flexibly schedule the second downlink data based on the second DCI. In this manner, even if the terminal device is in the RRC idle mode or the RRC inactive mode, the terminal device may still receive the paging message, the MsgB, or the RAR for a plurality of times, and perform the foregoing procedure after receiving the paging message, the MsgB, or the RAR, to obtain a new transmission parameter of the second downlink data, so that a transmission parameter of downlink data scheduled when the terminal device is in the RRC non-connected mode can be flexibly configured based on a requirement. When the first downlink data, the second DCI, or the second downlink data in the method procedure in the foregoing embodiment is the data specific to the terminal device, or when the foregoing method procedure is implemented in the dedicated detection space of the terminal device, the downlink data is flexibly scheduled, and data transmission security may be further improved.

An embodiment of this application further proposes a second data transmission method in which first downlink data indicates a transmission parameter of second downlink data. Compared with the method shown in FIG. 3, in this method, downlink data is flexibly scheduled, signaling overheads are further reduced, and a delay is shortened.

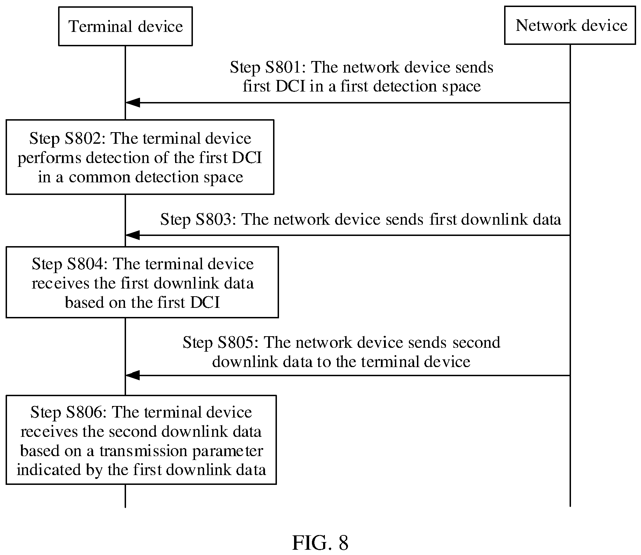

FIG. 8 is a flowchart of another data transmission manner according to an embodiment of this application. Similarly, the method may be applied to the communication system shown in FIG. 2. For ease of description, the following uses an example in which the method is performed by a network device and a terminal device. The method includes the following steps.

Step S801: The network device sends first DCI in a first detection space, where the first DCI is used to schedule first downlink data. Specifically, the first downlink data may be a paging message, a RAR, or a MsgB, and the first detection space may be a common detection space, or may be a dedicated detection space of the terminal device. This is not limited in embodiments of this application.

The first DCI is used to indicate a transmission parameter of a channel used to carry the first downlink data.

Step S802: The terminal device receives the first DCI in the first detection space, where the terminal device may be in an RRC non-connected mode.

Similar to the method procedure shown in FIG. 3, before this step, the terminal device already knows a resource position of the first detection space. For a configuration manner of the first detection space, refer to the method procedure in FIG. 3 or related descriptions in Embodiment 1 and Embodiment 2. Details are not described herein again.

Step S803: The network device sends the first downlink data based on the transmission parameter of the first downlink data, where the first downlink data is used to indicate a transmission parameter of second downlink data.

The first downlink data is used to indicate the transmission parameter of a channel used to carry the second downlink data.

It can be learned from Embodiment 1 and Embodiment 2 above that the first downlink data may be the paging message, the RAR, or the MsgB.

Step S804: The terminal device receives the first downlink data based on the first DCI.

Step S805: The network device sends the second downlink data based on the transmission parameter of the second downlink data, where the second downlink data is data specific to the terminal device.

The network device may send a data channel based on the transmission parameter indicated by the first downlink data, where the data channel carries the second downlink data.

Step S806: The terminal device receives the second downlink data based on the transmission parameter indicated by the first downlink data.

The terminal device receives the data channel based on the transmission parameter indicated by the first downlink data, to receive the second downlink data carried on the data channel.

The implementation method shown in FIG. 8 is described below by using an example with reference to specific embodiments.

### Embodiment 3

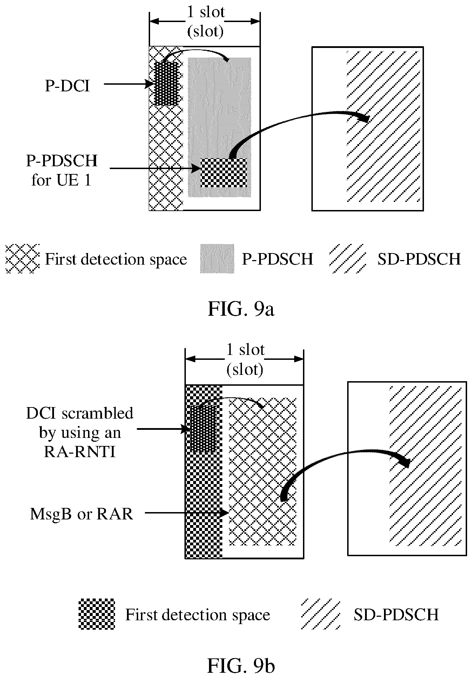

FIG. 9a is a schematic diagram of a scenario for the method procedure shown in FIG. 8 according to an embodiment of this application. For example, each large block in FIG. 9a represents a time unit (for example, a slot). P-DCI in FIG. 9a corresponds to the first DCI in the method procedure shown in FIG. 8. A P-PDSCH in FIG. 9a is a PDSCH that carries a paging message. A P-PDSCH for UE 1 included in the P-PDSCH corresponds to the first downlink data in the method procedure shown in FIG. 8. That is, the first downlink data in embodiments is the paging message. UE 1 corresponds to the terminal device in the method procedure shown in FIG. 8. An SD-PDSCH is a PDSCH that carries second downlink data.

Embodiment 3 is similar to Embodiment 1. Before initiating paging, a network device configures a first detection space for a terminal device. The first detection space may be a common detection space or a dedicated detection space of the terminal device. For a manner in which the network device sends first resource configuration information of the first detection space to the terminal device and the terminal device determines a resource position of the first detection space based on the first resource configuration information, refer to specific descriptions in Embodiment 1. Details are not described herein again.

In the scenario shown in FIG. 9a, the network device and the terminal device mainly perform the following steps.

Step 1: The network device sends the P-DCI in the first detection space, where the P-DCI is used to schedule the P-PDSCH.

The P-DCI may be DCI scrambled by using a P-RNTI. For details, refer to the related descriptions in Embodiment 1. Details are not described herein again.

Step 2: The terminal device performs detection of the P-DCI in the first detection space.

Step 3: The network device sends the P-PDSCH based on a transmission parameter of the P-PDSCH, where the P-PDSCH includes the first downlink data, namely, the P-PDSCH for UE 1, and the first downlink data is used to indicate a transmission parameter of the SD-PDSCH.

Step 4: The terminal device receives the P-PDSCH based on a transmission parameter indicated by the P-DCI, and determines the transmission parameter of the SD-PDSCH based on the first downlink data, namely, the P-PDSCH for UE 1, on the P-PDSCH.

For example, the first downlink data carries a transmission parameter of the second downlink data, and is used to determine a resource position of the SD-PDSCH that carries the second downlink data. For a manner of indicating the transmission parameter of the SD-PDSCH based on the P-PDSCH for UE 1, refer to the specific descriptions of the indication manner 1 or the indication manner 2 in the foregoing Embodiment 1. Details are not described herein again.

Optionally, the first downlink data may be used to indicate repetition information of the second downlink data. For example, the first downlink data further includes a part or all of the following information:
a repetition periodicity of an SD-PDSCH, a quantity of repetitions of an SD-PDSCH, valid time of an SD-PDSCH, or a valid number of an SD-PDSCH.

The repetition periodicity may be a time interval between resource positions of SD-PDSCHs. For example, a time interval between SD-PDSCHs that may receive the second downlink data is 10 slots, where data carried on each SD-PDSCH may be the same or may be different.

The quantity of repetitions may be a quantity of times that the terminal device receives an SD-PDSCH, or a quantity of times that a resource position of an SD-PDSCH is valid. For example, if the repetition periodicity is 10 slots, regardless of whether the terminal device receives data at the resource position of the SD-PDSCH, after the SD-PDSCH repeatedly occurs for three times, the configuration is invalid, to be specific, the resource position that is of the SD-PDSCH and that is determined based on the first downlink data and subsequent resource positions of the repeated SD-PDSCH are all invalid.

For the valid number and/or the valid time of the SD-PDSCH, refer to the related descriptions of the valid number and the valid time in the foregoing embodiments. Details are not described herein again.

Step 5: The network device sends the SD-PDSCH based on the transmission parameter of the SD-PDSCH, where the SD-PDSCH is data specific to the terminal device.

Step 6: The terminal device receives the SD-PDSCH based on the transmission parameter indicated by the P-PDSCH for UE 1.

The foregoing P-PDSCH for UE 1 is a paging message. To be specific, Embodiment 3 is an implementation of indicating the transmission parameter of the second downlink data based on the paging message. In another implementation, the transmission parameter of the second downlink data is indicated by using a RAR or a MsgB, which is briefly described below in Embodiment 4.

### Embodiment 4

FIG. 9b is a schematic diagram of another scenario for the method procedure shown in FIG. 8 according to an embodiment of this application. For example, each large block in FIG. 9b represents a time unit (for example, a slot). DCI scrambled by using an RA-RNTI in FIG. 9b corresponds to the first DCI in the method procedure shown in FIG. 8. A RAR or a MsgB in FIG. 9b corresponds to the first downlink data in the method procedure shown in FIG. 8. An SD-PDSCH is a PDSCH that carries second downlink data.

Embodiment 4 is similar to Embodiment 1 to Embodiment 3. Before initiating paging, a network device configures a first detection space for a terminal device. The first detection space may be a common detection space or a dedicated detection space of the terminal device. Specifically, the first detection space may be a detection space that is of a PDCCH and in which the terminal device receives control information of the RAR or the MsgB in a random access procedure. For a manner in which the network device sends first resource configuration information of the first detection space to the terminal device and the terminal device determines a resource position of the first detection space based on the first resource configuration information, refer to specific descriptions in Embodiment 1 to Embodiment 3. Details are not described herein again.

In the scenario shown in FIG. 9b, the network device and the terminal device mainly perform the following procedure.

Step 1: The network device sends, in the first detection space, the DCI scrambled by using the RA-RNTI, where the DCI is used to schedule the RAR or the MsgB. For details, refer to the related descriptions in the foregoing Embodiment 1 to Embodiment 3. Details are not described herein again.

Step 2: The terminal device performs, in the first detection space, detection of the DCI scrambled by using the RA-RNTI.

Step 3: The network device sends the RAR or the MsgB based on a transmission parameter of the RAR or the MsgB, where the RAR or the MsgB is used to indicate a transmission parameter of the SD-PDSCH.

Specifically, the network device sends a downlink data channel to the terminal device based on a transmission parameter of the downlink data channel, where the downlink data channel is used to carry the RAR or the MsgB.

Step 4: The terminal device receives the RAR or the MsgB based on a transmission parameter indicated by the DCI that is scrambled by using the RA-RNTI, and determines the transmission parameter of the SD-PDSCH based on the RAR or the MsgB.

Specifically, for a manner in which the terminal device determines the transmission parameter of the SD-PDSCH based on the RAR or the MsgB, refer to related descriptions in the foregoing Embodiment 1 to Embodiment 3. Details are not described herein again.

Step 5: The network device sends the SD-PDSCH based on the transmission parameter of the SD-PDSCH, where second downlink data carried on the SD-PDSCH is data specific to the terminal device.

Step 6: The terminal device receives the SD-PDSCH based on the transmission parameter indicated by the RAR or the MsgB.

Similarly, in Embodiment 4, it may be further configured that the transmission parameter of the SD-PDSCH or repetition information of the SD-PDSCH are indicated based on the RAR or the MsgB. For details, refer to the related descriptions in the foregoing Embodiment 1 to Embodiment 3. Details are not described herein again.

In Embodiment 3, the transmission parameter of the second downlink data may be directly indicated by using the P-PDSCH, so that signaling overheads for indicating the transmission parameter of the second downlink data are reduced, and a delay in receiving the second downlink data is shortened.

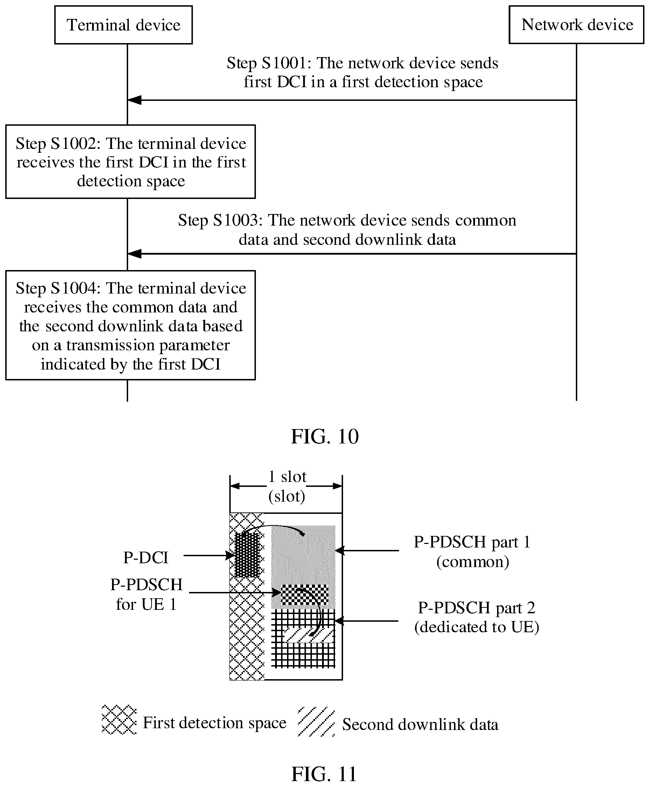

An embodiment of this application provides a third data transmission method. FIG. 10 is a schematic diagram of a flowchart of the method. Similarly, the method may be applied to the communication system shown in FIG. 2. For ease of description, the following uses an example in which the method is performed by a network device and a terminal device. The method includes the following steps.

Step S1001: The network device sends first DCI in a first detection space, where the first DCI is used to schedule common data and second downlink data. Specifically, the first detection space may be a common detection space, or may be a dedicated detection space of the terminal device. This is not limited in embodiments of this application.

Specifically, the network device sends the first DCI to the terminal device, where the first DCI is used to indicate a transmission parameter of a data channel, and the data channel is used to carry the common data and the second downlink data.

Step S 1002: The terminal device receives the first DCI in the first detection space, where the terminal device may be in an RRC non-connected mode.

Similar to the method procedure shown in FIG. 3, before this step, the terminal device already knows a resource position of the first detection space. For a configuration manner of the first detection space, refer to the method procedure in FIG. 3 or related descriptions in Embodiment 1 and Embodiment 2. Details are not described herein again.

Step S1003: The network device sends the common data and the second downlink data to the terminal device, where the second downlink data is data specific to the terminal device.

Specifically, the network device sends a downlink data channel to the terminal device based on the transmission parameter of the data channel, where the downlink data channel is used to carry the common data and the second downlink data.

Step S1004: The terminal device receives the common data and the second downlink data based on the first DCI.

The implementation method shown in FIG. 10 is described below by using an example with reference to a specific embodiment.

### Embodiment 5

FIG. 11 is a schematic diagram of a scenario for the method procedure shown in FIG. 10 according to an embodiment of this application. In the application scenario shown in FIG. 11, a rectangular box may represent one time unit (for example, one slot). In the scenario shown in FIG. 11, P-DCI is DCI used to schedule common data and second downlink data, and corresponds to the first DCI in the method shown in FIG. 10. An entire resource space scheduled by using the P-DCI may be divided into at least two parts. As shown in FIG. 11, the entire resource space may be divided into two parts: a P-PDSCH part 1 and a P-PDSCH part 2. One part is used to carry common data of a terminal device, and the remaining other part is used to carry data specific to at least one terminal device.

For example, the common data in this embodiment of this application may be carried in the P-PDSCH part 1, and the common data includes a paging message. The data specific to the at least one terminal device is carried in the P-PDSCH part 2. To be specific, the P-PDSCH part 2 may be further divided into a plurality of resource spaces that correspond to different terminal devices and that are each used to carry data specific to a respective terminal device, where the data corresponds to the second downlink data in the method shown in FIG. 10. For example, the P-PDSCH part 1 includes a paging message of UE 1, and the P-PDSCH part 2 includes second downlink data of UE 1. Optionally, the paging message of UE 1 includes data, for example, a P-PDSCH for UE 1 in FIG. 11, used to indicate a parameter of the second downlink data of UE 1. UE 1 may determine a resource position of the second downlink data in the P-PDSCH part 2 based on the parameter that is of the second downlink data and that is indicated by the P-PDSCH for UE 1.

For example, in this embodiment of this application, a message carried in the P-PDSCH part 1 may be encoded in a common encoding manner. In this encoding manner, the message carried in the P-PDSCH part 1 may be received and demodulated by all terminal devices. The P-PDSCH part 2 may be divided into a resource space of the at least one terminal device, in other words, may carry the data specific to the at least one terminal device. For example, as shown in FIG. 11, second downlink data of a terminal device occupies a part of the P-PDSCH part 2, and a remaining part of the P-PDSCH part 2 may carry data specific to another terminal device. A part or all of messages of different terminal devices carried in the P-PDSCH part 2 may be scrambled or encrypted by using dedicated information of the corresponding terminal devices. Data scrambled or encrypted by using dedicated information of a terminal device is data specific to the terminal device. In other words, the specific data such as the second downlink data can be descrambled only by the terminal device or a terminal device group to which the terminal device belongs. Therefore, data transmission security is improved in this manner.

In this embodiment, the P-DCI (first DCI) is used to schedule the common data in the P-PDSCH part 1 and the dedicated data of the terminal device in the P-PDSCH part 2. There may be a plurality of scheduling manners, and some are listed below.

Scheduling manner 1: Both the common data and the dedicated data of the terminal device are scheduled by using the P-DCI.

Specifically, a resource space indicated by the P-DCI is a sum of the P-PSDCH part 1 and the P-PSDCH part 2. In other words, the P-DCI is used to schedule both the common data (in the P-PSDCH part 1) and the dedicated data of the terminal device (in the P-PSDCH part 2). Alternatively, this may be understood as that the P-DCI is used to schedule the entire resource space. In this scheduling manner, a specific resource space occupied by the P-PSDCH part 1 and a specific resource space occupied by the P-PSDCH part 2 may be indicated by indicating proportions of the resource spaces occupied by the P-PSDCH part 1 and the P-PSDCH part 2 in the entire resource space. Division into the P-PSDCH part 1 and the P-PSDCH part 2 may be performed in a plurality of manners, and some are listed below.

Division manner 1: A protocol predefines division proportions of the P-PSDCH part 1 and the P-PSDCH part 2.

For example, the protocol predefines a proportion n/m of a time domain space and/or a frequency domain space occupied by the P-PSDCH part 1 in the entire resource space indicated by the P-DCI, where n and m are nonzero positive integers, and n is not greater than m. For example, n/m is 1/2, 1/3, or 2/5. For example, a sum of the proportions of the resource spaces occupied by the P-PSDCH part 1 and the P-PSDCH part 2 in the entire resource space is 1. Therefore, a proportion of a resource space occupied by one transport block in the entire resource space may be determined based on a proportion of a resource space occupied by the other transport block in the entire resource space. For example, the protocol predefines that the P-PSDCH part 1 occupies 1/3 of a time domain space and a frequency domain space of the entire resource space, and it may be determined that the P-PSDCH part 2 occupies 2/3 of the time domain space and the frequency domain space of the entire resource space.

Alternatively, the protocol may predefine that a time domain position of the P-PSDCH part 1 is before a time domain position of the P-PSDCH part 2, and a frequency domain position of the P-PSDCH part 1 is before a frequency domain position of the P-PSDCH part 2. Alternatively, the proportion n/m predefined in the protocol may carry a symbol. For example, if a value of the proportion is a positive number, it indicates that the time domain position of the P-PSDCH part 1 is before the time domain position of the P-PSDCH part 2; if a value of the proportion is a negative number, it indicates that the time domain position of the P-PSDCH part 1 is after the time domain position of the P-PSDCH part 2. Alternatively, the protocol predefines a value of the proportion, and the P-DCI carries at least one flag bit indicating a time domain position relationship and/or a frequency domain position relationship between the P-PSDCH part 1 and the P-PSDCH part 2. This is not limited in this embodiment of this application.

For example, the protocol predefines that the P-PSDCH part 1 occupies 1/3 of the entire time domain space indicated by the P-DCI, and occupies 1/4 of the entire frequency domain space. In this case, the terminal device may determine that a time domain space occupied by the P-PSDCH part 1 is the last 1/3 of the entire time domain space, a frequency domain space occupied by the P-PSDCH part 1 is the last 1/4 of the entire frequency domain space, and a remaining space is a resource space occupied by the P-PSDCH part 2, to be specific, a time domain space occupied by the P-PSDCH part 2 is the first 2/3 of the entire time domain space, and a frequency domain space occupied by the P-PSDCH part 2 is the first 3/4 of the entire frequency domain space.

Division manner 2: System information or higher layer signaling is used to configure a division manner of the P-PSDCH part 1 and the P-PSDCH part 2, or configure positions of the P-PSDCH part 1 and/or the P-PSDCH part 2 in the resource space scheduled by using the P-DCI. For example, the configuration is broadcast to all terminals in a cell by using system information SIB1. Alternatively, the network device performs configuration by using RRC signaling. For example, a value of the proportion is carried in an RRC release message or an RRC pause message, and configured for the terminal device.

Division manner 3: The first DCI (for example, the P-DCI or DCI scrambled by using an RA-RNTI) is used to configure a division manner of the P-PSDCH part 1 and the P-PSDCH part 2, or configure positions of the P-PSDCH part 1 and/or the P-PSDCH part 2 in the resource space scheduled by using the P-DCI.

For example, a part of fields in the DCI may be used to indicate a value of the proportion. For example, the field includes four bits, where bits in two consecutive bits indicate a value of n, and bits in remaining two consecutive bits indicate a value of m, so that the terminal device determines a value n/m of the proportion.

For another example, a second correspondence between different index values and different values of the proportion is preset, and an index value in the second correspondence is carried by using the P-DCI. After receiving the P-DCI, the terminal device determines, based on the second correspondence, the value, of the proportion, corresponding to the index value carried in the P-DCI that is received from the network device.

Specifically, the field may be an existing field in the DCI, or an extension field in the DCI.

It should be understood that the DCI includes several specific formats, for example, formats 1_0 and 0_0. DCI in different formats implements different functions, and includes different content. For example, DCI for scheduling a PDSCH is used to indicate information such as a transport block size, a coding scheme, a modulation and coding scheme, a redundancy version, and/or a resource position (a time domain resource position and/or a frequency domain resource position) of the scheduled PDSCH. For another example, DCI for scheduling a PUSCH includes an MCS index field that is used to indicate a modulation order and a code rate of the PUSCH. When the value of the proportion is indicated by using the existing field in the DCI, the network device may indicate, by using additional signaling, the terminal device to perform a new interpretation on the existing field in the DCI. For example, when an MCS index value in the DCI for scheduling a PUSCH is used to indicate the value of the proportion, the terminal device is triggered to determine the modulation order and the code rate based on the MCS index value, and the terminal device may be triggered to further determine the value of the proportion based on the MCS index value and the preset second correspondence.

The second correspondence may be predefined in a protocol or configured by the network device for the terminal device by using higher layer signaling. For example, the higher layer signaling is an RRC release message or an RRC pause message. For details, refer to the configuration manner of the first correspondence. Details are not described herein again.

Scheduling manner 2: The common data and the dedicated data of the terminal device are separately scheduled by using the first DCI.

Specifically, different fields in the first DCI may respectively indicate a transmission parameter of a channel that carries the common data and a transmission parameter of a channel that carries the dedicated data of the terminal device. The field may be an existing field or an extension field of the first DCI.

For example, a transmission parameter of the P-PSDCH part 1 may be indicated by using a first part of fields of the first DCI, and a transmission parameter of the P-PSDCH part 2 may be indicated by using a second part of fields of the first DCI.

The foregoing content is specific descriptions of indicating the terminal device to determine resource positions of the P-PSDCH part 1 and the P-PSDCH part 2. In FIG. 11, the second downlink data is carried in the P-PSDCH part 2. Actually, the second downlink data may be carried in the P-PSDCH part 1 or the P-PSDCH part 2. The P-PSDCH part 2 may alternatively be divided into dedicated resource spaces corresponding to a plurality of terminal devices. In this case, when sending the second downlink data to the terminal device, the network device may further indicate a resource position of the second downlink data in the P-PSDCH part 2. In this embodiment of this application, there are a plurality of manners for indicating a transmission parameter of the second downlink data, and some are listed below.

Manner 1: The first DCI is used for indication.

FIG. 11 is used as an example. The first DCI is the P-DCI, and the P-DCI indicates the transmission parameter of the second downlink data. For example, the P-DCI may carry the transmission parameter of the second downlink data, for example, time domain resource information and/or frequency domain resource information of the second downlink data, used to determine the resource position of the second downlink data. For details, refer to the following specific descriptions of indicating the transmission parameter of the second downlink data by using a P-PDSCH in Manner 2. Details are not described herein.

Manner 2: The common data is used for indication.

The common data scheduled by using the first DCI is used for indication. For example, in FIG. 11, a P-PSDCH for UE 1 included in the common data is used for indication.

Specifically, the P-PSDCH for UE 1 indicates the transmission parameter of the second downlink data. For example, the P-PSDCH for UE 1 includes time domain resource information and/or frequency domain resource information of the second downlink data, and the terminal device may determine the resource position of the second downlink data based on the time domain resource information and/or the frequency domain resource information of the second downlink data that are/is included in the P-PSDCH for UE 1. For example, the P-PSDCH for UE 1 includes the time domain resource information and the frequency domain resource information of the second downlink data, and the terminal device may determine a time domain resource position based on the time domain resource information, and determine a frequency domain resource position based on the frequency domain resource information. For another example, a time domain resource or a frequency domain resource of the second downlink data may be predefined in a protocol, and the terminal device determines the resource position of the second downlink data based on the protocol predefinition and the P-PSDCH for UE 1. For another example, a time domain resource or a frequency domain resource of the second downlink data may be indicated by using another signaling, and the terminal device determines the resource position of the second downlink data based on indication of the another signaling and the P-PSDCH for UE 1.

For example, it is assumed that the P-PSDCH for UE 1 includes the time domain resource information and the frequency domain resource information of the second downlink data.

For example, the frequency domain resource information included in the P-PSDCH for UE 1 is used to indicate a start position and length information of an RB on which the second downlink data is located. For example, the frequency domain resource information is an identifier and a quantity of RBs that carry the second downlink data. The time domain resource information included in the P-PSDCH for UE 1 may include specific time domain resource position information of the second downlink data. For example, the time domain resource information is a frame number and a slot number of a radio frame, and optionally, may further include a symbol number. The terminal device determines the time domain resource position and a time domain length of the second downlink data based on the time domain resource information. For another example, the time domain resource information may be further used to indicate a start time domain position and time domain length information of the second downlink data. For example, the time domain resource information includes a time interval (or referred to as a timing offset). The time interval may be a time interval between a first specified position of a PDCCH carrying the first DCI and a second specified position of a PDSCH carrying the second downlink data. The first specified position and the second specified position may be a same relative position in different resources, or may be different relative positions in different resources. For example, the time interval may be a time interval between a start time domain position of the PDCCH carrying the first DCI and a start time domain position of the PDSCH carrying the second downlink data. For another example, the time interval may be a time interval between a tail time domain position of the PDCCH carrying the first DCI and a start time domain position of the PDSCH carrying the second downlink data. For another example, the time interval may be a time interval between a start time domain position of the PDCCH carrying the first DCI and a tail time domain position of the PDSCH carrying the second downlink data. This is not limited in this embodiment of this application.

Manner 3: Protocol predefinition is used. Specifically, a protocol predefines a time domain resource and/or a frequency domain resource of the second downlink data.

Manner 4: Another signaling is used for indication, for example, RRC signaling that is specifically an RRC release message or an RRC pause message. Signaling indicating the transmission parameter of the second downlink data is not limited in embodiments of this application.

Based on the method procedure in FIG. 10, when a resource position of a downlink data packet is flexibly configured, signaling overheads can be further reduced, a delay can be shortened, and data transmission security can be improved.

The methods for configuring a downlink data transmission resource by the network device for the terminal device in the RRC non-connected mode are described in Embodiment 1 to Embodiment 5. In embodiments of this application, an uplink time-frequency resource used to send feedback information may be further configured for the terminal device. It should be understood that after receiving data such as the second downlink data from the network device, the terminal device may send feedback information for the second downlink data to the network device, to indicate, to the network device, a result of decoding the second downlink data by the terminal device. For example, the feedback information is a HARQ-ACK. If the terminal device receives the data sent by the network device and performs correct decoding, the terminal device sends an acknowledgement (acknowledge character, ACK) to the network device. If the terminal device does not receive the data sent by the network device, or performs incorrect decoding after receiving the data, the terminal device sends a negative acknowledgement (negative acknowledgement, NACK) to the network device. Correspondingly, after receiving the NACK sent by the terminal device, the network device may resend the data to the terminal device.

The following describes a manner in which the network device configures an uplink transmission parameter for the terminal device.

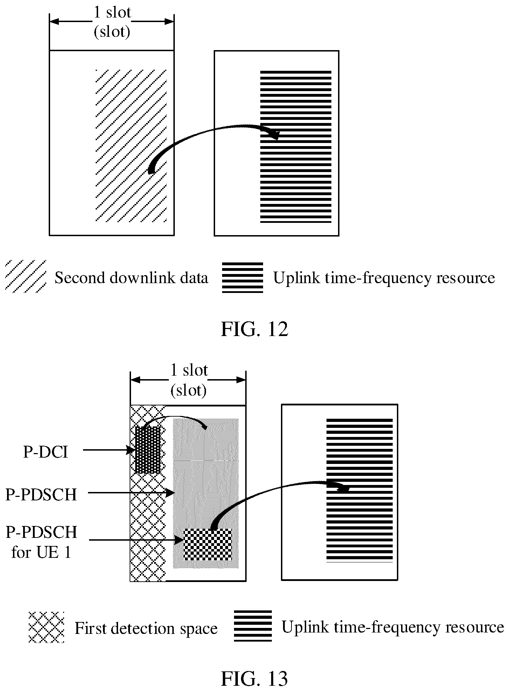

FIG. 12 is a schematic diagram of a scenario of configuring an uplink transmission parameter according to an embodiment of this application. In the scenario shown in FIG. 12, second downlink data may indicate a transmission parameter of an uplink channel (such as a PUSCH or a PUCCH), and the uplink channel is used to carry feedback information for the second downlink data. For example, the second downlink data includes an uplink time-frequency resource of the uplink channel, for example, time domain resource information and/or frequency domain resource information, used to determine a resource position of the uplink channel. Details are similar to related descriptions of indicating the transmission parameter of the second downlink data by using the P-PDSCH in Manner 2 in Embodiment 5, and details are not described herein again.

Optionally, in this embodiment of this application, the uplink channel used to carry the feedback information may be a PUSCH or a PUCCH. The transmission parameter of the uplink channel includes one or more of the following parameters: a time domain resource position, a frequency domain resource position, an MCS, a modulation scheme, a coding scheme, a TBS, an RV, a frequency hopping indication, and a power control command.

It should be noted that FIG. 12 is merely an example, and the second downlink data may be the second downlink data in FIG. 4, FIG. 7, FIG. 9a, FIG. 9b, or FIG. 11. The manner shown in FIG. 12 may be combined with any one of the foregoing implementations. This is not limited in embodiments of this application.

In addition to indicating the transmission parameter of the uplink time-frequency resource of the uplink channel, the second downlink data may further carry an ACK/NACK feedback rule, for example, configuration information of a sequence pattern. For example, the sequence pattern (Pattern) includes pattern-1 and pattern-2, and the feedback rule is that pattern-1 indicates an ACK, and pattern-2 indicates a NACK.

FIG. 13 is a schematic diagram of another scenario of configuring an uplink transmission parameter (for example, a time-frequency resource) according to an embodiment of this application. In the scenario shown in FIG. 13, a transmission parameter of an uplink channel may be configured based on first downlink data (for example, a P-PDSCH for UE 1 in FIG. 13). The uplink channel is used to carry feedback information for second downlink data. A specific configuration manner is similar to related descriptions of the configuration manner in the scenario in FIG. 12. Details are not described herein again.

It should be noted that FIG. 13 is merely an example. The first downlink data may be the first downlink data in FIG. 4, FIG. 9a, or FIG. 11, or an uplink time-frequency resource may be indicated based on the RAR or the MsgB in FIG. 7 or FIG. 9b. This is not limited in embodiments of this application.

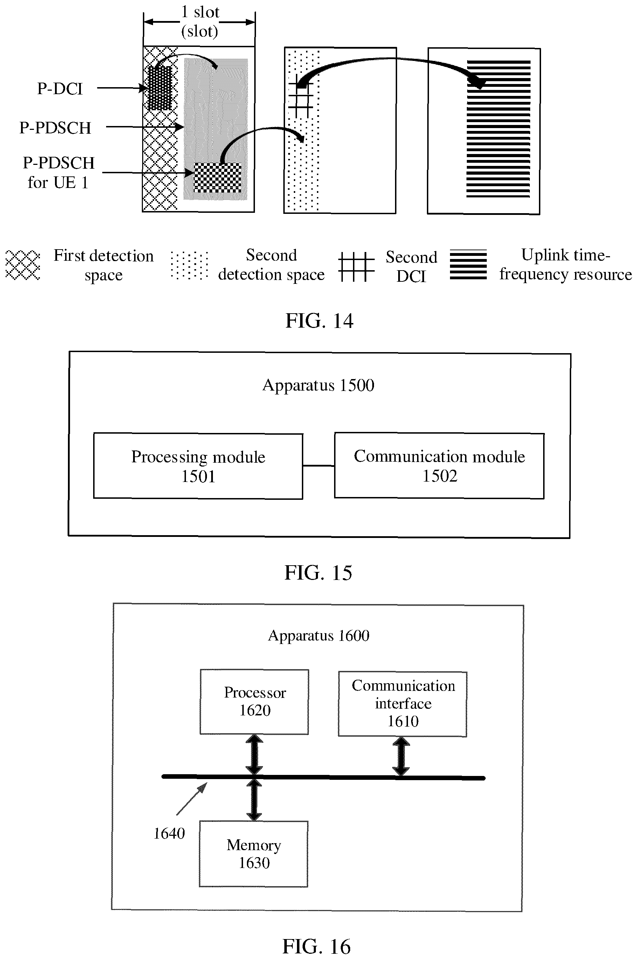

FIG. 14 is a schematic diagram of a third scenario of configuring an uplink transmission parameter (for example, a time-frequency resource) according to an embodiment of this application. In the scenario shown in FIG. 14, a transmission parameter of an uplink channel is configured by using DCI (namely, second DCI in FIG. 14) that is used to schedule second downlink data. The uplink channel is used to carry feedback information for the second downlink data. For example, an uplink time-frequency resource is indicated by using an existing field or an extension field of the DCI. A specific configuration manner is similar to related descriptions of indicating the transmission parameter of the second downlink data by using the P-PDSCH in Manner 2 in Embodiment 5. Details are not described herein again.

It should be noted that FIG. 14 is merely an example, and the second DCI may be the second DCI, namely, the DCI scrambled by using the X-RNTI, in FIG. 4 or FIG. 7. The manner shown in FIG. 14 may be combined with any one of the foregoing implementations. This is not limited in embodiments of this application.

In this embodiment of this application, the terminal device sends the feedback information based on the uplink transmission parameter configured in the foregoing manner. The feedback information may include one or more of the following information.
1. Feedback based on a sequence. To be specific, the feedback information is a sequence, and may be used to indicate a decoding result.

Specifically, the sequence may be a preamble, or a signal, for example, a demodulation reference signal (demodulation reference signal, DMRS), carried on an uplink control channel or an uplink data channel, or a sounding reference signal (sounding reference signal, SRS).

For example, different decoding results may be indicated by using different sequence patterns or sequence values. For example, as described above, the sequence pattern pattern-1 is an ACK, and the sequence pattern pattern-2 is a NACK. To be specific, when the sequence pattern sent by the terminal device is pattern-1, it indicates that the terminal device receives the data and performs correct decoding. When the sequence pattern sent by the terminal device is pattern-2, it indicates that the terminal device performs incorrect decoding or does not receive the data.

2. Feedback based on an uplink data channel. Specifically, the uplink data channel carries HARQ-ACK information, and the terminal device indicates, by using ACK/NACK information, a result of receiving the second downlink data by the terminal device. For example, if the terminal device receives the second downlink data and performs correct decoding, the terminal device feeds back ACK information; if the terminal device does not receive the second downlink data or performs incorrect decoding after receiving the second downlink data, the terminal device feeds back NACK information.

In the foregoing embodiments of this application, the methods provided in embodiments of this application are separately described from a perspective of interaction between a terminal device and a network device. To implement functions in the methods provided in embodiments of this application, the terminal device and the network device may include a hardware structure and/or a software module, to implement the foregoing functions in a form of the hardware structure, the software module, or a combination of the hardware structure and the software module. Whether a specific function in the foregoing functions is performed by the hardware structure, the software module, or the combination of the hardware structure and the software module depends on specific applications and design constraints of the technical solutions.

Same as the foregoing concept, as shown in FIG. 15, an embodiment of this application further provides an apparatus 1500, configured to implement functions of the terminal device in the foregoing methods. For example, the apparatus may be a software module or a chip system. In embodiments of this application, the chip system may include a chip, or may include a chip and another discrete component. The apparatus 1500 may include a processing module 1501 and a communication module 1502.

Division into modules in embodiments of this application is an example, and is merely logical function division. During actual implementation, there may be another division manner. In addition, functional modules in embodiments of this application may be integrated into one processor, or each of the modules may exist alone physically, or two or more modules are integrated into one module. The integrated module may be implemented in a form of hardware, or may be implemented in a form of a software functional module.

For example, when the apparatus 1500 implements functions of the terminal device in the procedure shown in FIG. 3, the communication module 1502 is configured to: receive first DCI from a network device in a common detection space; and receive second DCI and second downlink data from the network device in a second detection space.

For another example, the processing module 1501 is configured to: receive first DCI from a network device in a common detection space via the communication module 1502, and receive first downlink data based on the first DCI via the communication module 1502; and receive second DCI from a network device in a second detection space via the communication module 1502, and receive second downlink data based on the second DCI via the communication interface.

For another method performed by the processing module 1501 and the communication module 1502, refer to descriptions in the method procedure shown in FIG. 3. Details are not described herein again.

For example, when the apparatus 1500 implements functions of the terminal device in the procedure shown in FIG. 8, the communication module 1502 is configured to: receive first DCI from a network device in a common detection space; receive first downlink data; and receive second downlink data.

For another example, the processing module 1501 is configured to: receive first DCI from a network device in a common detection space via the communication module 1502, receive first downlink data based on the first DCI via the communication interface, where the first downlink data is used to indicate a transmission parameter of second downlink data, and the first downlink data is a paging message, a random access response RAR, or a message B MsgB; and receive the second downlink data based on the transmission parameter of the second downlink data via the communication module 1502.

For another method performed by the processing module 1501 and the communication module 1502, refer to descriptions in the method procedure shown in FIG. 8. Details are not described herein again.

For example, when the apparatus 1500 implements functions of the terminal device in the procedure shown in FIG. 10, the communication module 1502 is configured to: receive first DCI from a network device in a common detection space; and receive common data and second downlink data.

For another example, the processing module 1501 is configured to: receive first DCI from a network device in a common detection space via the communication module 1502; receive common data and second downlink data based on the first DCI via the communication module 1502, where the second downlink data is data specific to the terminal device; and receive the second downlink data from the network device based on the first DCI via the communication interface 1502.

For another method performed by the processing module 1501 and the communication module 1502, refer to descriptions in the method procedure shown in FIG. 10. Details are not described herein again.

The apparatus 1500 may further implement functions of the terminal device in the procedures shown in Embodiment 1 to Embodiment 5. For details, refer to descriptions in the method procedures shown in Embodiment 1 to Embodiment 5. Details are not described herein again.

FIG. 16 shows an apparatus 1600 according to an embodiment of this application. The apparatus shown in FIG. 16 may be an implementation of a hardware circuit of the apparatus shown in FIG. 15. The communication apparatus is applicable to implementing functions of the terminal device in the foregoing method embodiment in the flowchart shown in FIG. 3, FIG. 8, or FIG. 10. For ease of description, FIG. 16 shows only main components of the communication apparatus.

The apparatus 1600 shown in FIG. 16 includes at least one processor 1620, configured to implement functions of the terminal device in the methods provided in embodiments of this application.

The apparatus 1600 may further include at least one memory 1630, configured to store program instructions and/or data. The memory 1630 is coupled to the processor 1620. Coupling in embodiments of this application is indirect coupling or a communication connection between apparatuses, units, or modules, and may be in an electrical, mechanical, or another form, and is used for information exchange between the apparatuses, units, or modules. The processor 1620 may cooperate with the memory 1630. The processor 1620 may execute the program instructions stored in the memory 1630. At least one of the at least one memory may be included in the processor.

The apparatus 1600 may further include a communication interface 1610, configured to communicate with another device through a transmission medium, so that an apparatus in the apparatus 1600 may communicate with the another device. In embodiments of this application, the communication interface may be a transceiver, a circuit, a bus, a module, or a communication interface of another type. In embodiments of this application, the transceiver may be an independent receiver, an independent transmitter, a transceiver with an integrated receiving and sending function, or an interface circuit. The processor 1620 receives and sends data via the communication interface 1610, and is configured to implement the method performed by the terminal device in the embodiment corresponding to FIG. 3, FIG. 8, or FIG. 10.

For example, when the apparatus 1600 implements functions of the terminal device in the procedure shown in FIG. 3, the communication interface 1610 is configured to: receive first DCI from a network device in a common detection space; and receive second DCI and second downlink data from a network device in a second detection space.

For another example, the processor 1620 is configured to: receive first DCI from a network device in a common detection space via the communication interface 1610, and receive first downlink data based on the first DCI via the communication interface 1610; and receive second DCI from a network device in a second detection space via the communication interface 1610, and receive second downlink data based on the second DCI via the communication interface.

For another method performed by the processor 1620 and the communication interface 1610, refer to descriptions in the method procedure shown in FIG. 3. Details are not described herein again.

For example, when the apparatus 1600 implements functions of the terminal device in the procedure shown in FIG. 8, the communication interface 1610 is configured to: receive first DCI from a network device in a common detection space; receive first downlink data; and receive second downlink data.

For another example, the processor 1620 is configured to: receive first DCI from a network device in a common detection space via the communication interface 1610, receive first downlink data based on the first DCI via the communication interface 1610, where the first downlink data is used to indicate a transmission parameter of second downlink data, and the first downlink data is a paging message, a random access response RAR, or a message B MsgB; and receive the second downlink data based on the transmission parameter of the second downlink data via the communication interface 1610.

For another method performed by the processor 1620 and the communication interface 1610, refer to descriptions in the method procedure shown in FIG. 8. Details are not described herein again.

For example, when the apparatus 1600 implements functions of the terminal device in the procedure shown in FIG. 10, the communication interface 1610 is configured to: receive first DCI from a network device in a common detection space; and receive common data and second downlink data.

For another example, the processor 1620 is configured to: receive first DCI from a network device in a common detection space via the communication interface 1610, and receive common data and second downlink data based on the first DCI via the communication interface 1610, where the second downlink data is data specific to the terminal device; and receive the second downlink data from the network device based on the first DCI via the communication interface 1610.

For another method performed by the processor 1620 and the communication interface 1610, refer to descriptions in the method procedure shown in FIG. 10. Details are not described herein again.

For example, the apparatus 1600 may further implement functions of the terminal device in the procedures shown in Embodiment 1 to Embodiment 5. For details, refer to descriptions in the method procedures shown in Embodiment 1 to Embodiment 5. Details are not described herein again.

A specific connection medium between the communication interface 1610, the processor 1620, and the memory 1630 is not limited in this embodiment of this application. In this embodiment of this application, in FIG. 16, the memory 1630, the processor 1620, and the communication interface 1610 are connected through a bus 1640. The bus is represented by a thick line in FIG. 116. A manner of connection between other components is merely an example for description, and is not limited thereto. The bus may be classified into an address bus, a data bus, a control bus, and the like. For ease of representation, only one thick line is used to represent the bus in FIG. 16, but this does not mean that there is only one bus or only one type of bus.

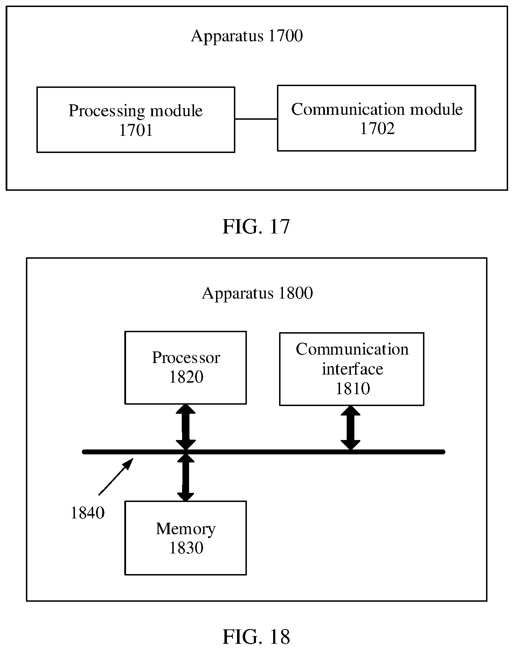

Similar to the foregoing concept, as shown in FIG. 17, an embodiment of this application further provides an apparatus 1700, configured to implement functions of the network device in the foregoing methods. For example, the apparatus may be a software module or a chip system. In embodiments of this application, the chip system may include a chip, or may include a chip and another discrete component. The apparatus 1700 may include a processing module 1701 and a communication module 1702.

For example, when the apparatus 1700 implements functions of the network device in the procedure shown in FIG. 3, the communication module 1702 is configured to: send first DCI to a terminal device in a common detection space; send second DCI to the terminal device in a second detection space; and send first downlink data and second downlink data to the terminal device.

For another example, the processing module 1701 is configured to: send first DCI to a terminal device in a common detection space via the communication module 1702; send second DCI to the terminal device in a second detection space via the communication module 1702; and send first downlink data and second downlink data to the terminal device via the communication module 1702.

For another method performed by the processing module 1701 and the communication module 1702, refer to descriptions in the method procedure shown in FIG. 3. Details are not described herein again.

For example, when the apparatus 1700 implements functions of the network device in the procedure shown in FIG. 8, the communication module 1702 is configured to: send first DCI to a terminal device in a common detection space; send first downlink data to the terminal device; and send second downlink data to the terminal device based on a transmission parameter of the second downlink data.

For another example, the processing module 1701 is configured to: send first DCI to a terminal device in a common detection space via the communication module 1702; send first downlink data to the terminal device via the communication module 1702; and send second downlink data to the terminal device based on a transmission parameter of the second downlink data via the communication module 1702.

For another method performed by the processing module 1701 and the communication module 1702, refer to descriptions in the method procedure shown in FIG. 8. Details are not described herein again.

For example, when the apparatus 1700 implements functions of the network device in the procedure shown in FIG. 10, the communication module 1702 is configured to: send first DCI to a terminal device in a common detection space; and send common data and second downlink data to the terminal device.

For another example, the processing module 1701 is configured to: send first DCI to a terminal device in a common detection space via the communication module 1702, where the first DCI is used to schedule common data and second downlink data, and the second downlink data is data specific to the terminal device; and send the common data and the second downlink data via the communication module 1702.

For another method performed by the processing module 1701 and the communication module 1702, refer to descriptions in the method procedure shown in FIG. 10. Details are not described herein again.

The apparatus 1700 may further implement functions of the network device in the procedures shown in Embodiment 1 to Embodiment 5. For details, refer to descriptions in the method procedures shown in Embodiment 1 to Embodiment 5. Details are not described herein again.

FIG. 18 shows an apparatus 1800 according to an embodiment of this application. The apparatus shown in FIG. 18 may be an implementation of a hardware circuit of the apparatus shown in FIG. 17. The communication apparatus is applicable to implementing functions of the network device in the foregoing method embodiment in the flowchart shown in FIG. 3, FIG. 8, or FIG. 10. For ease of description, FIG. 18 shows only main components of the communication apparatus.

The apparatus 1800 shown in FIG. 18 includes at least one processor 1820, configured to implement functions of the network device in the methods provided in embodiments of this application.

The apparatus 1800 may further include at least one memory 1830, configured to store program instructions and/or data. The memory 1830 is coupled to the processor 1820. The processor 1820 may cooperate with the memory 1830. The processor 1820 may execute the program instructions stored in the memory 1830. At least one of the at least one memory may be included in the processor.

The apparatus 1800 may further include a communication interface 1810, configured to communicate with another device through a transmission medium, so that an apparatus in the apparatus 1800 may communicate with the another device. The processor 1820 receives and sends data via the communication interface 1810, and is configured to implement the method performed by the network device in the embodiment corresponding to FIG. 3, FIG. 8, or FIG. 10.

For example, when the apparatus 1800 implements functions of the network device in the procedure shown in FIG. 3, the communication interface 1810 is configured to: send first DCI to a terminal device in a common detection space; send second DCI to the terminal device in a second detection space; and send second downlink data to the terminal device.

For another example, the processor 1820 is configured to: send first DCI to a terminal device in a common detection space via the communication interface 1810; send second DCI to the terminal device in a second detection space via the communication interface 1810; and send second downlink data to the terminal device via the communication interface 1810.

For another method performed by the processor 1820 and the communication interface 1810, refer to descriptions in the method procedure shown in FIG. 3. Details are not described herein again.

For example, when the apparatus 1800 implements functions of the network device in the procedure shown in FIG. 8, the communication interface 1810 is configured to send first DCI to a terminal device in a common detection space; send second downlink data to the terminal device based on a transmission parameter that is of the second downlink data and that is indicated by the first DCI.

For another example, the processor 1820 is configured to: send first DCI to a terminal device in a common detection space via the communication interface 1810, where the first DCI is used to indicate a transmission parameter of second downlink data; and send the second downlink data to the terminal device based on the transmission parameter of the second downlink data via the communication interface 1810.

For another method performed by the processor 1820 and the communication interface 1810, refer to descriptions in the method procedure shown in FIG. 8. Details are not described herein again.

For example, when the apparatus 1800 implements functions of the network device in the procedure shown in FIG. 10, the communication interface 1810 is configured to: send first DCI to a terminal device in a common detection space; and send common data and second downlink data to the terminal device.

For another example, the processor 1820 is configured to: send first DCI to a terminal device in a common detection space via the communication interface 1810, where the first DCI is used to schedule common data and second downlink data, and the second downlink data is data specific to the terminal device; and send the common data and the second downlink data via the communication interface 1810.

For another method performed by the processor 1820 and the communication interface 1810, refer to descriptions in the method procedure shown in FIG. 10. Details are not described herein again.

For example, the apparatus 1800 may further implement functions of the network device in the procedures shown in Embodiment 1 to Embodiment 5. For details, refer to descriptions in the method procedures shown in Embodiment 1 to Embodiment 5. Details are not described herein again.

A specific connection medium between the communication interface 1810, the processor 1820, and the memory 1830 is not limited in this embodiment of this application. In this embodiment of this application, the memory 1830, the processor 1820, and the communication interface 1810 are connected through a bus 1840 in FIG. 18. The bus is represented by a thick line in FIG. 18. A manner of connection between other components is merely an example for description, and is not limited thereto. The bus may be classified into an address bus, a data bus, a control bus, and the like. For ease of representation, only one thick line is used to represent the bus in FIG. 18, but this does not mean that there is only one bus or only one type of bus.

It should be noted that, in embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the methods disclosed with reference to embodiments of this application may be directly performed and completed by a hardware processor, or may be performed and completed by using a combination of hardware in the processor and a software module.

In embodiments of this application, the memory may be a nontransitory memory, such as a hard disk (hard disk drive, HDD) or a solid-state drive (solid-state drive, SSD), or may be a transitory memory (transitory memory), such as a random access memory (random access memory, RAM). The memory is any other medium that can carry or store expected program code in a form of an instruction structure or a data structure and that can be accessed by a computer, but is not limited thereto. The memory in embodiments of this application may alternatively be a circuit or any other apparatus that can implement a storage function, and is configured to store program instructions and/or data.

All or some of the methods in embodiments of this application may be implemented through software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of procedures or functions according to embodiments of the present application are generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

In embodiments of this application, on a premise that there is no logical contradiction, embodiments may be mutually referenced. For example, methods and/or terms in the method embodiments may be mutually referenced, functions and/or terms in the apparatus embodiments may be mutually referenced, and functions and/or terms in the apparatus embodiments and the method embodiments may be mutually referenced.

## Claims

1. A data transmission method, comprising:
receiving (S301) first downlink control information, DCI, from a network device in a common detection space, and receiving (S304) first downlink data based on the first DCI, wherein the first downlink data is used to indicate a second detection space, and the first downlink data is a paging message, a random access response, RAR, or a message B, MsgB; and
receiving (S306) second DCI from the network device in the second detection space, and receiving (S308) second downlink data based on the second DCI, wherein the second downlink data is data specific to a terminal device, and
the terminal device is in a radio resource control, RRC, non-connected mode.

2. The method according to claim 1, wherein that the first downlink data is used to indicate a second detection space comprises:
the first downlink data is used to indicate a control resource set and a search space, and the control resource set and the search space are used to determine the second detection space.

3. The method according to claim 1 or 2, wherein the first downlink data is further used to indicate valid time and/or a valid number of the second detection space.

4. The method according to any one of claims 1 to 3, wherein the method further comprises:
sending feedback information of the second downlink data to the network device based on an uplink transmission parameter, wherein the uplink transmission parameter is indicated by the first DCI, the second DCI, the first downlink data, or the second downlink data.

5. A data transmission method, comprising:
when a terminal device is in a radio resource control, RRC, non-connected mode, receiving (S801) first downlink control information, DCI, from a network device in a common detection space, and receiving (S804) first downlink data based on the first DCI, wherein the first downlink data is used to indicate a transmission parameter of second downlink data, and the first downlink data is a paging message, a random access response, RAR, or a message B, MsgB; and
receiving (S806) the second downlink data based on the transmission parameter of the second downlink data, wherein the second downlink data is data specific to the terminal device.

6. The method according to claim 5, wherein the method further comprises:
sending feedback information of the second downlink data to the network device based on an uplink transmission parameter, wherein the uplink transmission parameter is indicated by the first DCI, the first downlink data, or the second downlink data.

7. A data transmission method, comprising:
when a terminal device is in a radio resource control, RRC, non-connected mode, receiving (S1002) first downlink control information, DCI, from a network device in a common detection space, and (S1004) receiving a paging message and second downlink data based on the first DCI, wherein
the second downlink data is data specific to the terminal device.

8. The method according to claim 7, wherein the method further comprises:
sending feedback information of the second downlink data to the network device based on an uplink transmission parameter, wherein the uplink transmission parameter is indicated by the first DCI, common data, or the second downlink data.

9. A data transmission method, comprising:
sending (S301) first downlink control information, DCI, to a terminal device in a common detection space, wherein the first DCI is used to schedule first downlink data, the first downlink data is used to indicate a second detection space, and the first downlink data is a paging message, a random access response, RAR, or a message B, MsgB;
sending (S305) second DCI to the terminal device in the second detection space, wherein the second DCI is used to schedule second downlink data, and the second downlink data is data specific to the terminal device; and
sending (S307) the second downlink data to the terminal device, wherein
the terminal device is in a radio resource control, RRC, non-connected mode.

10. The method according to claim 9, wherein that the first downlink data is used to indicate a second detection space comprises:
the first downlink data is used to indicate a control resource set, CORESET, and a search space, SearchSpace, that are of the second detection space.

11. The method according to claim 9 or 10, wherein the first downlink data is further used to indicate valid time and/or a valid number of the second detection space.

12. The method according to any one of claims 9 to 11, further comprising:
receiving feedback information of the second downlink data from the terminal device based on an uplink transmission parameter, wherein the uplink transmission parameter is indicated by the first DCI, the second DCI, the first downlink data, or the second downlink data.

13. A communication apparatus (1500, 1600), configured to implement the method according to any one of claims 1 to 12.

14. A computer-readable storage medium, wherein the computer-readable storage medium stores a computer program or instructions; and when the computer program or the instructions are executed by one or more processors, the method according to any one of claims 1 to 12 is implemented.

15. A computer program product, comprising instructions, wherein when the instructions are run on a computer, the computer is enabled to perform the method according to any one of claims 1 to 12.

## Patentansprüche

1. Datenübertragungsverfahren, umfassend:
Empfangen (S301) von ersten Abwärtsstreckensteuerinformationen, DCI, aus einer Netzwerkvorrichtung in einem gemeinsamen Erfassungsraum, und Empfangen (S304) von ersten Abwärtsstreckendaten basierend auf den ersten DCI, wobei die ersten Abwärtsstreckendaten dazu verwendet werden, einen zweiten Erfassungsraum anzugeben, und die ersten Abwärtsstreckendaten eine Funkrufnachricht, eine Direktzugriffsantwort, RAR, oder eine Nachricht B, MsgB, sind; und
Empfangen (S306) von zweiten DCI aus der Netzwerkvorrichtung im zweiten Erfassungsraum und Empfangen (S308) von zweiten Abwärtsstreckendaten basierend auf den zweiten DCI, wobei die zweiten Abwärtsstreckendaten für eine Endgerätevorrichtung spezifische Daten sind, und
die Endgerätevorrichtung sich in einem nicht-verbundenen Funkressourcensteuerungs-, RRC, Modus befindet.

2. Verfahren nach Anspruch 1, wobei dass die ersten Abwärtsstreckenddaten dazu verwendet werden, einen zweiten Erfassungsraum anzugeben, Folgendes umfasst:
die ersten Abwärtsstreckendaten werden dazu verwendet, einen Steuerressourcensatz und einen Suchraum anzugeben, und der Steuerressourcensatz und der Suchraum werden dazu verwendet, den zweiten Erfassungsraum zu bestimmen.

3. Verfahren nach Anspruch 1 oder 2, wobei die ersten Abwärtsstreckendaten ferner dazu verwendet werden, eine gültige Zeit und/oder eine gültige Anzahl des zweiten Erfassungsraums anzugeben.

4. Verfahren nach einem der Ansprüche 1 bis 3, wobei das Verfahren ferner umfasst:
Senden von Rückmeldungsinformationen der zweiten Abwärtsstreckendaten an die Netzwerkvorrichtung basierend auf einem Aufwärtsstreckenübertragungsparameter, wobei der Aufwärtsstreckenübertragungsparameter durch die ersten DCI, die zweiten DCI, die ersten Abwärtsstreckendaten oder die zweiten Abwärtsstreckendaten angegeben wird.

5. Datenübertragungsverfahren, umfassend:
wenn sich eine Endgerätevorrichtung in einem nicht-verbundenen Funkressourcensteuerungs-, RRC, Modus befindet, Empfangen (S801) von ersten Abwärtsstreckensteuerinformationen, DCI, aus einer Netzwerkvorrichtung in einem gemeinsamen Erfassungsraum, und Empfangen (S804) von ersten Abwärtsstreckendaten basierend auf den ersten DCI, wobei die ersten Abwärtsstreckendaten dazu verwendet werden, einen Übertragungsparameter zweiter Abwärtsstreckendaten anzugeben, und die ersten Abwärtsstreckendaten eine Funkrufnachricht, eine Direktzugriffsantwort, RAR, oder eine Nachricht B, MsgB, sind; und
Empfangen (S806) der zweiten Abwärtsstreckendaten basierend auf dem Übertragungsparameter der zweiten Abwärtsstreckendaten, wobei die zweiten Abwärtsstreckendaten für die Endgerätevorrichtung spezifische Daten sind.

6. Verfahren nach Anspruch 5, wobei das Verfahren ferner umfasst:
Senden von Rückmeldungsinformationen der zweiten Abwärtsstreckendaten an die Netzwerkvorrichtung basierend auf einem Aufwärtsstreckenübertragungsparameter, wobei der Aufwärtsstreckenübertragungsparameter durch die ersten DCI, die ersten Abwärtsstreckendaten oder die zweiten Abwärtsstreckendaten angegeben wird.

7. Datenübertragungsverfahren, umfassend:
wenn sich eine Endgerätevorrichtung in einem nicht-verbundenen Funkressourcensteuerungs-, RRC, Modus befindet, Empfangen (S1002) von ersten Abwärtsstreckensteuerinformationen, DCI, aus einer Netzwerkvorrichtung in einem gemeinsamen Erfassungsraum, und (S1004) Empfangen einer Funkrufnachricht und zweiter Abwärtsstreckendaten basierend auf den ersten DCI, wobei
die zweiten Abwärtsstreckendaten für die Endgerätevorrichtung spezifische Daten sind.

8. Verfahren nach Anspruch 7, wobei das Verfahren ferner umfasst:
Senden von Rückmeldungsinformationen der zweiten Abwärtsstreckendaten an die Netzwerkvorrichtung basierend auf einem Aufwärtsstreckenübertragungsparameter, wobei der Aufwärtsstreckenübertragungsparameter durch die ersten DCI, die gemeinsamen Daten oder die zweiten Abwärtsstreckendaten angegeben wird.

9. Datenübertragungsverfahren, umfassend:
Senden (S301) von ersten Abwärtsstreckensteuerinformationen, DCI, an eine Endgerätevorrichtung in einem gemeinsamen Erfassungsraum, wobei die ersten DCI dazu verwendet werden, erste Abwärtsstreckendaten zeitlich zu planen, die ersten Abwärtsstreckendaten dazu verwendet werden, einen zweiten Erfassungsraum anzugeben, und die ersten Abwärtsstreckendaten eine Funkrufnachricht, eine Direktzugriffsantwort, RAR, oder eine Nachricht B, MsgB, sind;
Senden (S305) von zweiten DCI an die Endgerätevorrichtung im zweiten Erfassungsraum, wobei die zweiten DCI dazu verwendet werden, zweite Abwärtsstreckendaten zeitlich zu planen, und die zweiten Abwärtsstreckendaten für die Endgerätevorrichtung spezifische Daten sind; und
Senden (S307) der zweiten Abwärtsstreckendaten an die Endgerätevorrichtung, wobei die Endgerätevorrichtung sich in einem nicht-verbundenen Funkressourcensteuerungs-, RRC, Modus befindet.

10. Verfahren nach Anspruch 9, wobei dass die ersten Abwärtsstreckenddaten dazu verwendet werden, einen zweiten Erfassungsraum anzugeben, Folgendes umfasst:
die ersten Abwärtsstreckendaten werden dazu verwendet, einen Steuerressourcensatz, CORESET, und einen Suchraum, SearchSpace, des zweiten Erfassungsraums anzugeben.

11. Verfahren nach Anspruch 9 oder 10, wobei die ersten Abwärtsstreckendaten ferner dazu verwendet werden, eine gültige Zeit und/oder eine gültige Anzahl des zweiten Erfassungsraums anzugeben.

12. Verfahren nach einem der Ansprüche 9 bis 11, ferner umfassend:
Empfangen von Rückmeldungsinformationen der zweiten Abwärtsstreckendaten aus der Endgerätevorrichtung basierend auf einem Aufwärtsstreckenübertragungsparameter, wobei der Aufwärtsstreckenübertragungsparameter durch die ersten DCI, die zweiten DCI, die ersten Abwärtsstreckendaten oder die zweiten Abwärtsstreckendaten angegeben wird.

13. Kommunikationsvorrichtung (1500, 1600), die dazu ausgelegt ist, das Verfahren nach einem der Ansprüche 1 bis 12 zu implementieren.

14. Computerlesbares Speichermedium, wobei das computerlesbare Speichermedium ein Computerprogramm oder Anweisungen speichert; und wenn das Computerprogramm oder die Anweisungen durch einen oder mehrere Prozessoren ausgeführt werden, das Verfahren nach einem der Ansprüche 1 bis 12 implementiert wird.

15. Computerprogrammprodukt, umfassend Anweisungen, wobei beim Ausführen der Anweisungen auf einem Computer der Computer in die Lage versetzt wird, das Verfahren nach einem der Ansprüche 1 bis 12 durchzuführen.

## Revendications

1. Procédé de transmission de données, comprenant :
la réception (S301) de premières informations de commande de liaison descendante, DCI, provenant d'un dispositif de réseau dans un espace de détection commun, et la réception (S304) de premières données de liaison descendante sur la base des premières DCI, les premières données de liaison descendante étant utilisées pour indiquer un second espace de détection, et les premières données de liaison descendante étant un message de radiomessagerie, une réponse d'accès aléatoire, RAR, ou un message B, MsgB ; et
la réception (S306) de secondes DCI provenant du dispositif de réseau dans le second espace de détection, et la réception (S308) de secondes données de liaison descendante sur la base des secondes DCI, les secondes données de liaison descendante étant des données spécifiques à un dispositif terminal, et
le dispositif terminal étant dans un mode non-connecté de commande de ressources radio, RRC.

2. Procédé selon la revendication 1, le fait que les premières données de liaison descendante sont utilisées pour indiquer un second espace de détection comprenant :
les premières données de liaison descendante étant utilisées pour indiquer un ensemble de ressources de commande et un espace de recherche, et l'ensemble de ressources de commande et l'espace de recherche étant utilisés pour déterminer le second espace de détection.

3. Procédé selon la revendication 1 ou 2, les premières données de liaison descendante étant en outre utilisées pour indiquer une durée de validité et/ou un nombre valide du second espace de détection.

4. Procédé selon l'une quelconque des revendications 1 à 3, le procédé comprenant en outre :
l'envoi d'informations de rétroaction des secondes données de liaison descendante au dispositif de réseau sur la base d'un paramètre de transmission de liaison montante, le paramètre de transmission de liaison montante étant indiqué par les premières DCI, les secondes DCI, les premières données de liaison descendante ou les secondes données de liaison descendante.

5. Procédé de transmission de données, comprenant :
lorsqu'un dispositif terminal est dans un mode non-connecté de commande de ressources radio, RRC, la réception (S801) de premières informations de commande de liaison descendante, DCI, provenant d'un dispositif de réseau dans un espace de détection commun, et la réception (S804) de premières données de liaison descendante sur la base des premières DCI, les premières données de liaison descendante étant utilisées pour indiquer un paramètre de transmission de secondes données de liaison descendante, et les premières données de liaison descendante étant un message de radiomessagerie, une réponse d'accès aléatoire, RAR, ou un message B, MsgB ; et
la réception (S806) des secondes données de liaison descendante sur la base du paramètre de transmission des secondes données de liaison descendante, les secondes données de liaison descendante étant des données spécifiques au dispositif terminal.

6. Procédé selon la revendication 5, le procédé comprenant en outre :
l'envoi d'informations de rétroaction des secondes données de liaison descendante au dispositif de réseau sur la base d'un paramètre de transmission de liaison montante, le paramètre de transmission de liaison montante étant indiqué par les premières DCI, les premières données de liaison descendante ou les secondes données de liaison descendante.

7. Procédé de transmission de données, comprenant :
lorsqu'un dispositif terminal est dans un mode non-connecté de commande de ressources radio, RRC, la réception (S1002) de premières informations de commande de liaison descendante, DCI, provenant d'un dispositif de réseau dans un espace de détection commun, et (S1004) la réception d'un message de radiomessagerie et de secondes données de liaison descendante sur la base des premières DCI,
les secondes données de liaison descendante étant des données spécifiques au dispositif terminal.

8. Procédé selon la revendication 7, le procédé comprenant en outre :
l'envoi d'informations de rétroaction des secondes données de liaison descendante au dispositif de réseau sur la base d'un paramètre de transmission de liaison montante, le paramètre de transmission de liaison montante étant indiqué par les premières DCI, les données communes ou les secondes données de liaison descendante.

9. Procédé de transmission de données, comprenant :
l'envoi (S301) de premières informations de commande de liaison descendante, DCI, à un dispositif terminal dans un espace de détection commun, les premières DCI étant utilisées pour planifier des premières données de liaison descendante, les premières données de liaison descendante étant utilisées pour indiquer un second espace de détection, et les premières données de liaison descendante étant un message de radiomessagerie, une réponse d'accès aléatoire, RAR ou un message B, MsgB ;
l'envoi (S305) de secondes DCI au dispositif terminal dans le second espace de détection, les secondes DCI étant utilisées pour planifier des secondes données de liaison descendante, et les secondes données de liaison descendante étant des données spécifiques au dispositif terminal ; et
l'envoi (S307) des secondes données de liaison descendante au dispositif terminal,
le dispositif terminal étant dans un mode non-connecté de commande de ressources radio, RRC.

10. Procédé selon la revendication 9, le fait que les premières données de liaison descendante sont utilisées pour indiquer un second espace de détection comprenant :
les premières données de liaison descendante étant utilisées pour indiquer un ensemble de ressources de commande, CORESET, et un espace de recherche, SearchSpace, qui appartiennent au second espace de détection.

11. Procédé selon la revendication 9 ou 10, les premières données de liaison descendante étant en outre utilisées pour indiquer une durée de validité et/ou un nombre valide du second espace de détection.

12. Procédé selon l'une quelconque des revendications 9 à 11, comprenant en outre :
la réception d'informations de rétroaction des secondes données de liaison descendante provenant du dispositif terminal sur la base d'un paramètre de transmission de liaison montante, le paramètre de transmission de liaison montante étant indiqué par les premières DCI, les secondes DCI, les premières données de liaison descendante ou les secondes données de liaison descendante.

13. Appareil de communication (1500, 1600), configuré pour mettre en œuvre le procédé selon l'une quelconque des revendications 1 à 12.

14. Support de stockage lisible par ordinateur, le support de stockage lisible par ordinateur stockant un programme informatique ou des instructions ; et lorsque le programme informatique ou les instructions sont exécutés par un ou plusieurs processeurs, le procédé selon l'une quelconque des revendications 1 à 12 étant mis en œuvre.

15. Produit de programme informatique, comprenant des instructions, les instructions, lorsqu'elles sont exécutées sur un ordinateur, permettant à l'ordinateur de réaliser le procédé selon l'une quelconque des revendications 1 à 12.
